# FASCICULE DE BREVET EUROPEEN

(11) **EP 4 594 702 B1**
(45) Date de publication et mention de la délivrance du brevet: **03.06.2026**
(21) Numéro de dépôt: 23782556.7
(22) Date de dépôt: 29.09.2023
(51) Int. Cl.: G01B 11/02, F17C 3/02, G01B 11/08, G01B 11/24, G01B 21/04, G01B 21/10, G01B 21/20

(54) **PROCÉDÉ DE CONTRÔLE DE GÉOMÉTRIE MIS EN OEUVRE PAR ORDINATEUR**
COMPUTERIMPLEMENTIERTES GEOMETRIEÜBERWACHUNGSVERFAHREN
COMPUTER-IMPLEMENTED GEOMETRY MONITORING METHOD

(30) Priorité: 30.09.2022 FR 2210027
(43) Date de publication de la demande: 06.08.2025
(73) Titulaire: GAZTRANSPORT ET TECHNIGAZ, 78470 Saint-Rémy-lès-Chevreuse (FR)
(72) Inventeur: PESQUET, Fabien, 78470 Saint-Rémy-lès-Chevreuse (FR); FRAYSSE, Vincent, 78470 Saint-Rémy-lès-Chevreuse (FR); VOLUT, Mikaël, 78470 Saint-Rémy-lès-Chevreuse (FR); HIRICOIU, Christian, 78470 Saint-Rémy-lès-Chevreuse (FR)
(74) Mandataire: Loyer & Abello
(86) Numéro de dépôt international: PCT/EP2023/077177
(87) Numéro de publication internationale: WO 2024/068998

(56) Documents cités:
- WO-A1-2020/193584
- WO-A1-2022/200536
- KR-A- 20200 039 948

## Description

### Domaine technique

L'invention se rapporte à un procédé de contrôle de géométrie mis en œuvre par ordinateur pour contrôler la géométrie d'une structure, notamment pour contrôler la géométrie d'une structure porteuse pour une installation de stockage de gaz liquéfié. Plus particulièrement, la structure à contrôler peut comporter une paroi globalement verticale de forme globalement polygonale régulière.

### Arrière-plan technologique

On connaît par le document US 8,550,276 B2 une installation de stockage de gaz liquéfié comprenant une paroi verticale et une paroi de fond, où ladite paroi de fond présente une pluralité de secteurs images les uns des autres par rotation, et où ladite paroi de fond a la forme d'un polygone régulier dont chaque côté correspond à un desdits secteurs. Une telle structure est avantageuse en cela qu'elle permet de réaliser chaque secteur avec des éléments identiques, ce qui diminue le nombre d'éléments différents à employer. En particulier, une grande partie de la paroi de fond est réalisée à l'aide d'éléments rectangulaires de dimensions identiques.

Une autre installation de stockage de gaz liquéfié de ce type est connue par le document WO 2011/048300 A1. Dans ce document également, l'installation comprend une paroi verticale et une paroi de fond. La paroi verticale présente une pluralité de pans verticaux. La paroi de fond inclut une pluralité de pièces rectangulaires réparties en secteurs images les uns des autres par rotation, les bords des pièces rectangulaires d'un desdits secteurs étant respectivement parallèles et perpendiculaires à l'un desdits pans verticaux. Toutefois, contrairement au document US 8,550,276 B2, le nombre desdits pans verticaux est le double du nombre desdits secteurs. Le nombre de pans verticaux est par exemple choisi égal à 56. Comme cela décrit dans ce document, le fait de prévoir un nombre de pans verticaux qui est élevé, en particulier le double du nombre des secteurs, permet de limiter la quantité de matière nécessaire pour réaliser la structure porteuse devant recevoir la paroi verticale et la paroi de fond, à volume de stockage égal.

Dans ces deux documents, la structure porteuse est par exemple réalisée en béton.

Quant au document KR20200039948A, il décrit un procédé de contrôle de géométrie mis en œuvre par ordinateur permettant de mesurer la distance entre deux parois se faisant face d'une cuve de forme orthogonale, la cuve étant utilisée pour stocker du gaz naturel liquéfié par le moyen d'un capteur de distance laser.

### Résumé

Certains aspects de l'invention partent du constat que la structure porteuse présente, en pratique, certains écarts dimensionnels avec la forme de polygone régulier idéalement prévue. De tels écarts dimensionnels peuvent rendre difficile la construction de l'installation. Il convient donc que les écarts dimensionnels n'excèdent pas des tolérances spécifiées à l'avance. Toutefois, si la structure porteuse est de dimensions importantes, vérifier manuellement que la structure porteuse tombe dans les tolérances spécifiées peut prendre un temps considérable, pendant lequel on ne peut pas continuer la construction de l'installation, puisqu'on ne sait pas si la structure porteuse est conforme ou non.

Une idée à la base de l'invention consiste à fournir un procédé pour contrôler la géométrie d'une structure, qui est mis en œuvre par ordinateur à partir d'une pluralité de mesures représentant chacune une position mesurée en trois dimensions d'un point situé sur la structure à contrôler.

L'invention propose ainsi un procédé de contrôle de géométrie mis en œuvre par ordinateur, comprenant :
- spécifier un modèle de structure, par exemple représentant une structure porteuse pour une installation de stockage de gaz liquéfié, le modèle de structure comportant des attributs géométriques et des attributs dimensionnels, les attributs géométriques comportant un nombre N de côtés d'un polygone, N étant un nombre entier supérieur ou égal à 3, les attributs dimensionnels incluant une plage acceptable de diamètre ;
- fournir une pluralité de premières mesures représentant chacune une position mesurée dans un repère en trois dimensions d'un point situé sur une structure à contrôler ;
- déterminer un système de coordonnées cylindriques présentant un axe vertical parallèle à un axe dudit repère en trois dimensions, ledit axe vertical présentant une position qui minimise une dispersion desdites premières mesures selon une cordonnée radiale dans ledit système de coordonnées cylindriques ;
- spécifier des premiers secteurs disjoints de l'espace dans le système de coordonnées cylindriques, lesdits premiers secteurs étant définis par des incréments de coordonnées azimutales et des incréments de coordonnées axiales dans ledit système de coordonnées cylindriques ;
- calculer, à partir des premières mesures, une pluralité de premiers points de discrétisation, chaque premier point de discrétisation représentant une position moyenne de la structure à contrôler dans l'un desdits premiers secteurs ;
- calculer, à partir des premiers points de discrétisation, des positions estimées de N arêtes verticales de la structure à contrôler ;
- calculer, à partir des positions estimées des N arêtes verticales, des positions estimées de N médianes, chaque médiane étant une médiane d'un pan vertical de la structure à contrôler ; et
- à partir des positions estimées des N médianes, comparer des distances entre des médianes diamétralement opposées avec ladite plage acceptable de diamètre.

Avec le procédé de contrôle de géométrie tel que défini ci-dessus, un contrôle de la géométrie de la structure porteuse peut être réalisé à partir des premières mesures, de façon automatisée, c'est-à-dire sans intervention d'un utilisateur excepté pour spécifier le modèle de la structure porteuse. Le contrôle de géométrie est ainsi aisé à mettre en œuvre même lorsque la structure porteuse est de très grandes dimensions.

Le nombre N représente un nombre de côtés d'un polygone devant servir de directrice à une paroi verticale de la structure à contrôler. La paroi verticale, si elle est conforme, sera proche d'une forme idéale composée de N pans verticaux séparés par N arêtes verticales et formant une surface cylindrique polygonale ayant un polygone régulier à N côtés comme directrice. En d'autres termes, la plage acceptable de diamètre peut représenter une distance acceptable entre des médianes respectives de deux pans verticaux diamétralement opposés, qui assure une ressemblance suffisante avec la forme idéale.

Selon des modes de réalisation, le procédé de contrôle de géométrie peut comporter une ou plusieurs des caractéristiques suivantes.

Selon un mode de réalisation, ledit axe dudit repère en trois dimensions est parallèle à la direction du champ de gravité terrestre à l'emplacement de la structure à contrôler.

Selon un mode de réalisation, les attributs dimensionnels incluent en outre une plage acceptable de rayon, et le procédé de contrôle de géométrie comprend en outre comparer des distances entre lesdites positions estimées des N médianes et ledit axe vertical avec ladite plage acceptable de rayon.

En d'autres termes, la plage acceptable de rayon peut représenter une distance acceptable entre les médianes et ledit axe vertical, qui assure une ressemblance suffisante avec la forme idéale.

Selon un mode de réalisation, les attributs dimensionnels incluent en outre une plage acceptable de largeur de pan, et le procédé de contrôle de géométrie comprend en outre comparer des distances entre les positions estimées de deux arêtes verticales voisines avec ladite plage acceptable de largeur de pan.

En d'autres termes, la plage acceptable de largeur de pan peut représenter une distance acceptable entre deux arêtes verticales voisines, qui assure une ressemblance suffisante avec la forme idéale.

Selon un mode de réalisation, les attributs dimensionnels incluent en outre une plage acceptable de non-verticalité d'arête, et le procédé de contrôle de géométrie comprend en outre comparer des distances, perpendiculairement à l'axe vertical dudit système de coordonnées cylindriques, entre des points d'extrémité de chaque arête verticale avec ladite plage acceptable de non-verticalité d'arête.

En d'autres termes, la plage acceptable de non-verticalité d'arête peut représenter une distance acceptable, perpendiculairement à un axe vertical de la structure à contrôler, entre deux points d'extrémité d'une arête verticale donnée, qui assure une ressemblance suffisante avec la forme idéale.

Selon un mode de réalisation, les attributs dimensionnels incluent en outre une plage acceptable d'ovalisation, et le procédé de contrôle de géométrie comprend en outre comparer une différence de diamètre entre un plus grand cercle inscrit de la paroi verticale et un plus petit cercle circonscrit de la paroi verticale de la structure à contrôler avec ladite plage acceptable d'ovalisation.

En d'autres termes, la plage acceptable de non-verticalité d'arête peut représenter une différence de diamètre acceptable entre un plus grand cercle inscrit de la paroi verticale et un plus petit cercle circonscrit de la paroi verticale, qui assure une ressemblance suffisante avec la forme idéale.

Selon un mode de réalisation, les attributs dimensionnels incluent en outre une plage acceptable de déformation locale des pans verticaux, et le procédé de contrôle de géométrie comprend en outre comparer des déformations locales de la structure à contrôler avec ladite plage acceptable de déformation locale des pans verticaux.

Selon un mode de réalisation, les attributs dimensionnels incluent en outre une plage acceptable de non-verticalité des pans verticaux, et le procédé de contrôle de géométrie comprend en outre :
- sélectionner un sous-ensemble des premiers points de discrétisation, dans lequel sous-ensemble les coordonnées azimutales des premiers points de discrétisation sont égales entre elles ;
- déterminer des écarts de coordonnée radiale entre les premiers points de discrétisation du sous-ensemble ; et
- comparer les écarts de coordonnée radiale avec ladite plage acceptable de non-verticalité des pans verticaux.

Selon un mode de réalisation, les écarts de coordonnée radiale sont des écarts de coordonnée radiale entre un premier point de discrétisation du sous-ensemble qui présente la coordonnée verticale la plus faible et les autres premiers points de discrétisation du sous-ensemble.

Selon un mode de réalisation, les attributs dimensionnels incluent en outre une plage acceptable de non-planéité des pans verticaux, et le procédé de contrôle de géométrie comporte en outre :
- à partir des positions estimées des N arêtes verticales, sélectionner les premières mesures correspondant à un pan vertical de la structure à contrôler ;
- calculer un paramètre de non-planéité de pan vertical à partir des premières mesures sélectionnées, et comparer le paramètre de non-planéité de pan vertical avec ladite plage acceptable de non-planéité des pans verticaux.

Le paramètre de non-planéité de pan vertical peut être calculé pour un seul ou certains des pans verticaux ou de préférence pour tous les pans verticaux de la structure à contrôler.

Selon un mode de réalisation, les attributs géométriques comportent en outre une paroi de fond plane, les attributs dimensionnels incluent en outre une plage acceptable de non-planéité de la paroi de fond, et le procédé de contrôle de géométrie comporte en outre :
- fournir une pluralité de deuxièmes mesures représentant chacune une position mesurée dans ledit repère en trois dimensions d'un point situé sur une paroi de fond de la structure à contrôler ;
- associer aux deuxièmes mesures un système de coordonnées cartésiennes, ledit système de coordonnées cartésiennes présentant un premier axe, un deuxième axe et un troisième axe perpendiculaires entre eux, le troisième axe coïncidant avec ledit axe vertical dudit système de coordonnées cylindriques ;
- spécifier des deuxièmes secteurs disjoints de l'espace dans ledit système de coordonnées cartésiennes, lesdits deuxièmes secteurs étant définis par des incréments de coordonnées selon le premier axe et le deuxième axe dudit système de coordonnées cartésiennes ;
- calculer, à partir des deuxièmes mesures, une pluralité de deuxièmes points de discrétisation, chaque deuxième point de discrétisation représentant une position moyenne de la paroi de fond de la structure à contrôler dans l'un desdits deuxièmes secteurs ;
- calculer un paramètre de non-planéité de la paroi de fond à partir des deuxièmes points de discrétisation, et comparer le paramètre de non-planéité de la paroi de fond avec ladite plage acceptable de non-planéité de la paroi de fond.

Selon un mode de réalisation, les attributs dimensionnels incluent en outre une plage acceptable de déformation locale de la paroi de fond, et le procédé de contrôle de géométrie comprend en outre comparer des déformations locales de la paroi de fond de la structure à contrôler avec ladite plage acceptable de déformation locale de la paroi de fond.

Selon un mode de réalisation, N est un nombre pair, plus particulièrement N est un nombre pair compris entre 8 et 56, plus particulièrement encore N = 8 ou N = 56.

Selon un mode de réalisation, le procédé de contrôle de géométrie comprend en outre une étape de génération consistant à générer une représentation visuelle d'un résultat d'au moins une dite comparaison, ou de toutes lesdites comparaisons ou de certaines desdites comparaisons.

Une telle représentation visuelle peut être affichée à un utilisateur ou bien enregistrée en vue d'un affichage ultérieur à un utilisateur, par exemple. Ceci permet à permet à l'utilisateur d'avoir des informations utilisables pour décider d'actions correctives à entreprendre sur la paroi verticale et/ou la paroi de fond de la structure à contrôler.

Selon un mode de réalisation, le procédé de contrôle de géométrie comporte en outre une étape d'affichage consistant à afficher ladite représentation visuelle sur un dispositif d'affichage pour un utilisateur.

Selon un mode de réalisation, le procédé de contrôle de géométrie comporte en outre l'étape d'attribuer une qualification de conformité à la structure à contrôler, la qualification de conformité étant choisie parmi conforme et non-conforme.

Selon un mode de réalisation, la pluralité de premières mesures provient d'une acquisition de mesures au moyen d'un instrument de mesure dans la structure à contrôler.

Selon un mode de réalisation, l'instrument de mesure comporte un appareil de télédétection par laser disposé dans un espace interne de la structure à contrôler.

Selon un mode de réalisation, l'invention fournit en outre un programme d'ordinateur comprenant des instructions qui, lorsque le programme est exécuté par un ordinateur, conduisent l'ordinateur à mettre en œuvre le procédé de contrôle de géométrie selon l'un quelconque des modes de réalisation décrits ci-dessus.

Selon un mode de réalisation, l'invention fournit en outre un support de données lisible par ordinateur sur lequel ledit programme d'ordinateur est enregistré.

Selon un mode de réalisation, l'invention fournit en outre un dispositif de contrôle de géométrie comprenant au moins un processeur et au moins une mémoire contenant un programme d'ordinateur, dans lequel ladite au moins une mémoire et le programme d'ordinateur sont configurés, avec ledit au moins un processeur, pour causer l'exécution du procédé de contrôle de géométrie selon l'un quelconque des modes de réalisation décrits ci-dessus par le dispositif de contrôle de géométrie.

Les mesures peuvent être fournies au programme d'ordinateur et au dispositif de contrôle de géométrie de diverses manières. Selon un mode de réalisation, le dispositif de contrôle de géométrie comprend l'instrument de mesure précité, l'instrument de mesure étant configuré pour enregistrer la pluralité de premières mesures et le cas échéant la deuxième pluralité de mesures dans la mémoire du dispositif de contrôle de géométrie. Selon un autre mode de réalisation, le dispositif de contrôle de géométrie est configuré pour recevoir la pluralité de premières mesures et le cas échéant la deuxième pluralité de mesures sur un support de données ou via une interface réseau.

Selon un mode de réalisation, l'invention fournit en outre un procédé de contrôle de conformité pour contrôler une conformité géométrique d'une structure à contrôler, le procédé de contrôle de conformité comprenant :
- une étape d'acquisition consistant à acquérir une pluralité de mesures représentant chacune une position en trois dimensions mesurée d'un point situé sur la structure à contrôler ; et
- la mise en œuvre du procédé de contrôle de géométrie selon l'un quelconque des modes de réalisation décrits ci-dessus.

Selon un mode de réalisation, l'étape d'acquisition est réalisée en plusieurs sous-étapes, l'appareil de télédétection par laser étant disposé à chaque sous-étape en une localisation différente dans l'espace interne de la structure à contrôler.

Selon un mode de réalisation, pendant l'étape d'acquisition, les mesures sont associées à une mesure de la direction du champ de gravité terrestre à l'emplacement de la structure à contrôler.

Selon un mode de réalisation, la structure à contrôler est une structure porteuse pour une installation de stockage de gaz liquéfié.

Selon un mode de réalisation, la structure à contrôler est en béton.

Selon un mode de réalisation, l'installation de stockage de gaz liquéfié est destinée à être installée à terre. Dans ce cas, la structure à contrôler peut être réalisée en béton.

Selon un autre mode de réalisation, l'installation de stockage de gaz liquéfié est destinée à être installée à bord d'une structure flottante, telle qu'un navire. Dans ce cas, la structure à contrôler peut être une portion d'une double coque que présente la structure flottante.

Dans un mode de réalisation, le gaz liquéfié est du GNL, à savoir un mélange à forte teneur en méthane stocké à une température d'environ -162°C à la pression atmosphérique. D'autres gaz liquéfiés peuvent aussi être envisagés, notamment l'éthane, le propane, le butane ou l'éthylène. Des gaz liquéfiés peuvent aussi être stockés sous pression, par exemple à une pression relative comprise entre 2 et 20 bars, et en particulier à une pression relative voisine de 2 bars. La cuve peut être réalisée selon différentes techniques, notamment sous la forme d'une cuve intégrée à membrane ou d'une cuve autoporteuse. En particulier, la paroi verticale de la cuve peut être réalisée par juxtaposition de rangées verticales de modules de paroi isolants plans et de rangées verticales de modules de paroi isolants de coin comme décrit par exemple dans la demande internationale n°PCT/EP2022/057845, publiée sous le n°WO 2022/200536 A1, ou dans la demande internationale n°PCT/EP2022/057848, publiée sous le n°WO 2022/200539 A1.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] représente, en coupe perpendiculairement à son axe vertical, la forme d'une structure porteuse polygonale pour une installation de stockage de gaz liquéfié.
[Fig.2] La [Fig.2] est une illustration de principe de la non-planéité d'un pan porteur vertical de la structure porteuse de la [Fig.1].
[Fig.3] La [Fig.3] est un diagramme-blocs représentant les étapes d'un procédé de contrôle de conformité de la structure porteuse de la [Fig.1].
[Fig.4] La [Fig.4] est une vue partielle et en perspective, depuis l'espace interne de la structure porteuse, illustrant une étape d'acquisition de mesures réalisée dans la structure porteuse.
[Fig.5] La [Fig.5] est un schéma illustrant à titre d'explication un repère cartésien dans lequel sont exprimées les mesures obtenues lors de l'étape d'acquisition.
[Fig.6] La [Fig.6] est un schéma analogue à la [Fig.1], illustrant divers attributs dimensionnels de la structure porteuse.
[Fig.7] La [Fig.7] est un schéma analogue à la [Fig.1], illustrant à titre d'explication un paramètre d'ovalisation de la structure porteuse.
[Fig.8] La [Fig.8] est un schéma illustrant à titre d'explication un paramètre de non-verticalité d'arête de la structure porteuse.
[Fig.9A] La [Fig.9A] est un schéma illustrant à titre d'explication, ensemble avec la [Fig.9B], le principe d'une étape de calcul utilisée pour exprimer les coordonnées des mesures obtenues lors de l'étape d'acquisition dans le repère cylindrique de la [Fig.10].
[Fig.9B] La [Fig.9B] est un schéma illustrant à titre d'explication, ensemble avec la [Fig.9A], le principe d'une étape de calcul utilisée pour exprimer les coordonnées des mesures obtenues lors de l'étape d'acquisition dans le repère cylindrique de la [Fig.10].
[Fig.10] La [Fig.10] est un schéma illustrant à titre d'explication un repère cylindrique utilisé pour exprimer les coordonnées des mesures obtenues lors de l'étape d'acquisition.
[Fig.11A] La [Fig.11A] est un schéma illustrant à titre d'explication, ensemble avec la [Fig.11B] et la [Fig.11C], le principe d'une discrétisation réalisée sur les mesures de la paroi porteuse verticale.
[Fig.11B] La [Fig.11B] est un schéma illustrant à titre d'explication, ensemble avec la [Fig.11A] et la [Fig.11C], le principe d'une discrétisation réalisée sur les mesures de la paroi porteuse verticale.
[Fig.11C] La [Fig.11C] est un schéma illustrant à titre d'explication, ensemble avec la [Fig.11A] et la [Fig.11B], le principe d'une discrétisation réalisée sur les mesures de la paroi porteuse verticale.
[Fig.12] La [Fig.12] est un schéma illustrant à titre d'explication le principe d'un calcul de positions estimées d'arêtes verticales et de médianes des pans verticaux de la paroi porteuse verticale.
[Fig.13A] La [Fig.13A] est un schéma analogue à la [Fig.1] et à la [Fig.6], illustrant à titre d'explication le principe d'un contrôle par le calcul de divers paramètres de la paroi porteuse verticale.
[Fig.13B] La [Fig.13B] est un schéma illustrant à titre d'explication le principe d'un contrôle par le calcul de déformations locales de la paroi porteuse verticale.
[Fig.13C] La [Fig.13C] est un schéma illustrant à titre d'explication le principe d'un contrôle par le calcul d'une verticalité de la paroi porteuse verticale.
[Fig.14] La [Fig.14] est un schéma illustrant à titre d'explication le principe d'une discrétisation réalisée sur les mesures de la paroi porteuse de fond visible sur la [Fig.4].
[Fig.15A] La [Fig.15A] est un graphe illustrant à titre d'explication un paramètre de non-planéité de la paroi porteuse de fond.
[Fig.15B] La [Fig.15B] est un graphe illustrant à titre d'explication un autre paramètre de non-planéité de la paroi porteuse de fond.
[Fig.16] La [Fig.16] est un schéma illustrant à titre d'explication le principe d'un contrôle par le calcul de déformations locales de la paroi porteuse de fond.
[Fig.17] La [Fig.17] est un diagramme-blocs fonctionnel d'un dispositif de contrôle de géométrie pour mettre en œuvre le procédé de contrôle de conformité de la [Fig.3].
[Fig.18] La [Fig.18] est un schéma illustrant à titre d'explication le principe d'un contrôle par le calcul d'un paramètre de non-planéité de la paroi porteuse verticale.
[Fig.19] La [Fig.19] est un schéma illustrant à titre d'explication des lignes de repère utilisables pour positionner des modules de paroi isolants sur la paroi porteuse verticale.
[Fig.20] La [Fig.20] est un schéma illustrant à titre d'explication des lignes de repère utilisables pour positionner des blocs isolants sur la paroi porteuse de fond.

### Description des modes de réalisation

Comme on l'a mentionné ci-dessus, l'invention s'intéresse à la réalisation d'une installation de stockage de gaz liquéfié, qui porte la référence 1 dans la description qui va suivre.

Selon une variante, l'installation 1 est apte à stocker un gaz liquéfié, en particulier du gaz naturel liquéfié (GNL) à une température d'environ -162°C et à pression atmosphérique ou d'autres gaz liquéfiés.

On décrit tout d'abord la structure porteuse 10. La structure porteuse 10 comprend au moins une paroi porteuse qui définit une cavité destinée à recevoir la cuve étanche 20. Dans un mode de réalisation, une paroi porteuse principale 12 présente une géométrie à peu près cylindrique qui entoure la cavité. Une telle paroi porteuse principale 12 peut en outre être fermée par une autre paroi porteuse à au moins une extrémité dans la direction directrice. Dans un mode de réalisation, une telle paroi porteuse principale 12 peut s'étendre entre une paroi porteuse de fond et une paroi porteuse de couvercle.

L'installation 1 peut être prévue pour être située à terre. La paroi porteuse principale 12 est alors typiquement verticale, c'est-à-dire située dans un plan parallèle à la direction de l'accélération de pesanteur aux tolérances dimensionnelles près. La structure porteuse 10 est par exemple réalisée en béton. De façon non représentée sur les dessins, la paroi porteuse de fond peut être située au niveau du sol ou éventuellement sous le niveau du sol. De façon non représentée sur les dessins, à l'extrémité de la paroi porteuse principale 12 opposée à la paroi porteuse de fond, la structure porteuse 10 comprend une paroi porteuse de couvercle fermant l'espace interne 11 délimité par la paroi porteuse de fond et la paroi porteuse verticale 12. Cette paroi porteuse de couvercle peut supporter divers équipements utilisables pour acheminer le produit liquide depuis ou vers cet espace interne 11. La paroi porteuse de fond et/ou la paroi porteuse de couvercle peuvent par exemple être planes. Toutefois, d'autres formes sont possibles pour la paroi porteuse de fond et la paroi porteuse de couvercle, notamment des formes de calotte sphérique.

En alternative, l'installation 1 peut être prévue pour être installée à bord d'une structure flottante, telle qu'un navire. Dans ce cas, la structure porteuse 10 est une portion d'une double coque que présente la structure flottante. La paroi porteuse principale 12 peut éventuellement être non verticale, et même présenter une direction directrice perpendiculaire à la direction de l'accélération de pesanteur lorsque la structure flottante est au repos.

Dans la suite, on considère plus particulièrement le cas d'une installation 1 située à terre et où la paroi porteuse principale 12 est verticale. On parlera ainsi dans la suite d'une paroi porteuse verticale 12. Il est néanmoins précisé que la description qui suit s'applique à une orientation quelconque de la paroi porteuse principale 12 par rapport à la direction de l'accélération de pesanteur.

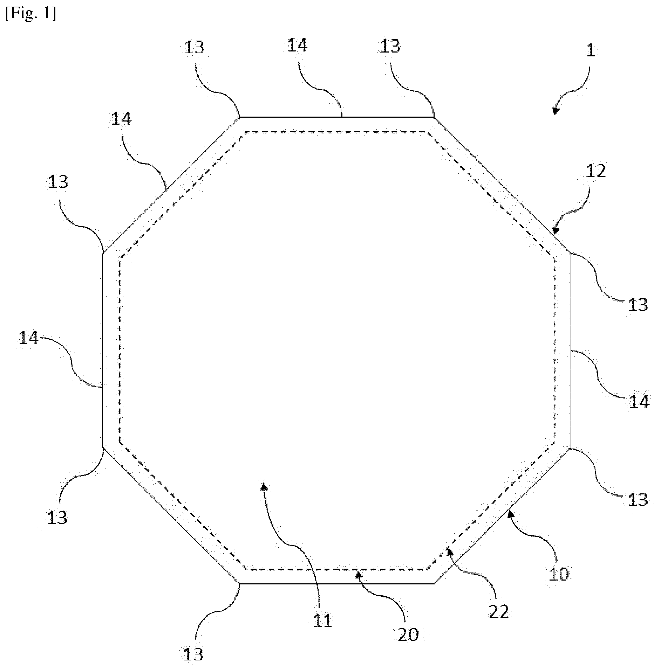

La [Fig.1] est une vue schématique en coupe de la structure porteuse 10, prise perpendiculairement à un axe vertical 9 de la paroi porteuse verticale 12. La paroi porteuse verticale 12 est représentée en trait plein sur la [Fig.1]. La paroi porteuse verticale 12 forme une surface cylindrique polygonale et a été typiquement construite par des techniques de génie civil. Ainsi, la paroi porteuse verticale 12 présente des pans verticaux 14 séparés les uns des autres par des arêtes 13.

La cuve étanche 20 (en pointillés sur la [Fig.1]) est destinée à être installée dans l'espace interne 11 de la structure porteuse 10. La cuve 20 comporte une paroi périphérique verticale 22 destinée à être en regard de la paroi porteuse verticale 12. De façon non représentée sur les dessins, la cuve 20 comporte en outre une paroi de fond en regard de la paroi porteuse de fond et une paroi de couvercle en regard de la paroi porteuse de couvercle.

La paroi périphérique verticale 22 peut être formée de rangées verticales de modules de paroi isolants plans et de rangées verticales de modules de paroi isolants de coin comme décrit par exemple dans la demande internationale n°PCT/EP2022/057845, publiée sous le n°WO 2022/200536 A1, ou dans la demande internationale n°PCT/EP2022/057848, publiée sous le n°WO 2022/200539 A1. La paroi de fond peut comporter une pluralité de secteurs angulaires images les uns des autres par rotation comme décrit dans WO 2022/200536 A1 ou WO 2022/200539 A1.

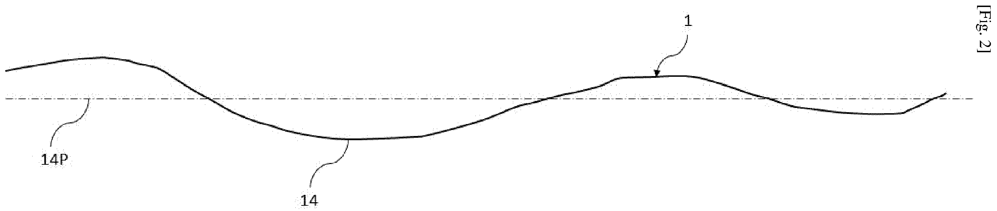

La position et les orientations des pans verticaux 14 peuvent présenter des déviations dimensionnelles par rapport à une forme prévue de polygone régulier. En outre, comme représenté schématiquement sur la [Fig.2], chaque pan vertical 14 peut présenter des déviations dimensionnelles par rapport à une forme idéale plane 14P. Ces déviations dimensionnelles peuvent par exemple être dues à des tolérances dimensionnelles sur une construction en béton. De tels écarts dimensionnels peuvent rendre difficile la construction de l'installation 1. Il convient donc que les écarts dimensionnels n'excèdent pas des tolérances spécifiées à l'avance. Toutefois, si la structure porteuse 10 est de dimensions importantes, vérifier manuellement que la structure porteuse 10 tombe dans les tolérances spécifiées peut prendre un temps considérable, pendant lequel on ne peut pas continuer la construction de l'installation 1 puisqu'on ne sait pas si la structure porteuse 10 est conforme ou non.

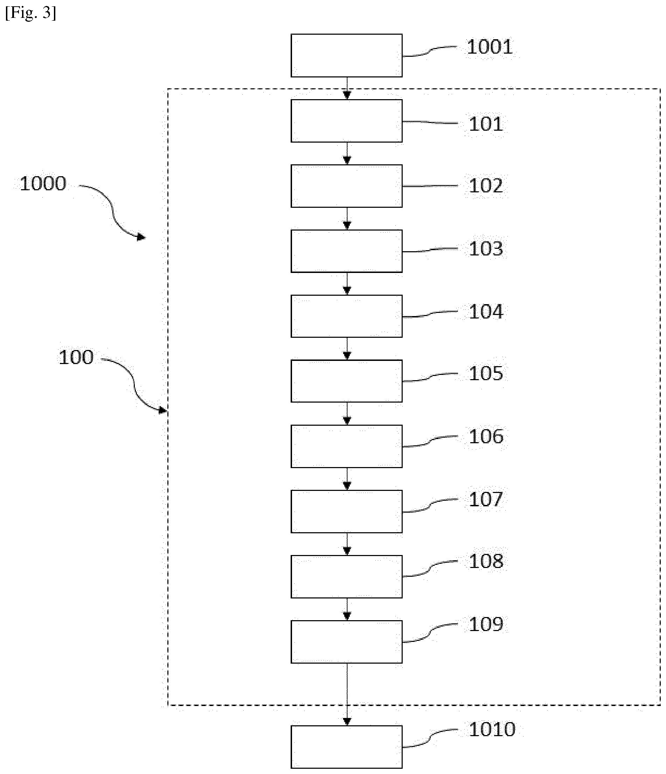

On décrit ci-après, en référence aux figures 3 à 16, un procédé 1000 de contrôle de conformité (ci-après désigné par « le procédé 1000 » par commodité) pour contrôler la conformité géométrique de la structure porteuse 1 par rapport à un modèle.

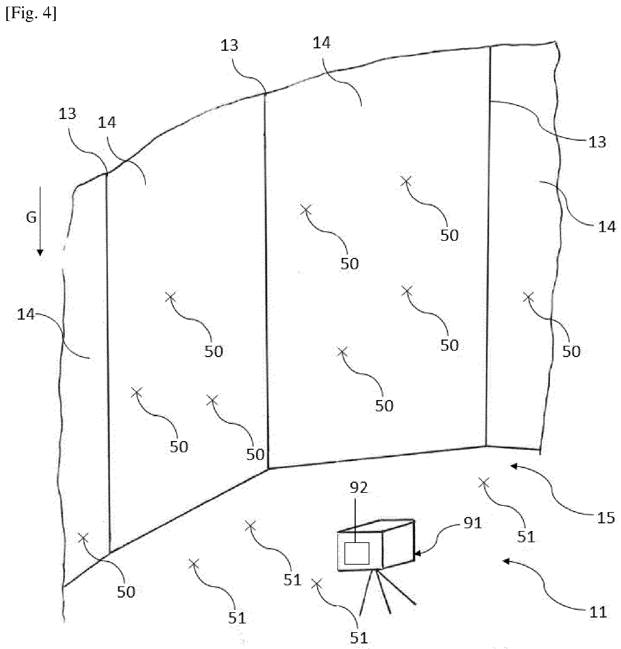

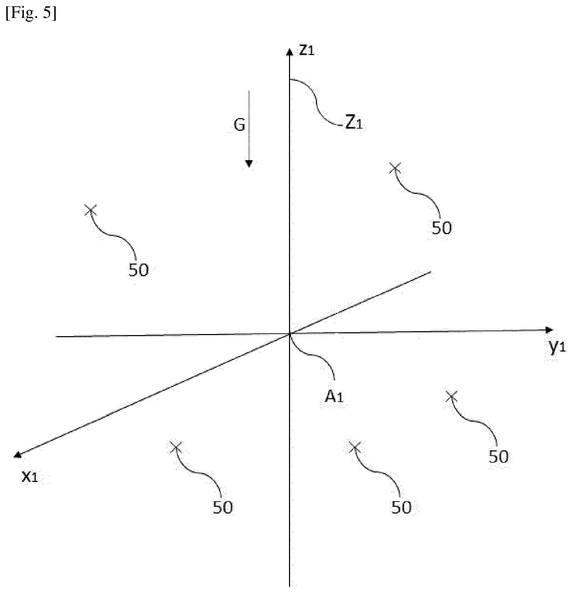

Dans une première étape 1001 (cf. [Fig.3]) du procédé 1000, la structure porteuse 1 ayant été construite, on acquiert une pluralité de mesures 50 (cf. [Fig.4] et [Fig.5]). Chaque mesure 50 représente une position en trois dimensions mesurée d'un point situé sur la paroi porteuse verticale 12. En principe, chaque mesure 50 peut être acquise par toute technique convenable de télédétection. Toutefois, il est particulièrement avantageux d'acquérir les mesures 50 au moyen d'un appareil de télédétection par laser (lidar) 91 disposé dans l'espace interne 11. Le principe de fonctionnement d'un tel appareil 91 est connu en tant que tel et n'est donc pas décrit en détail ici.

Dans une variante d'exécution très simple, l'étape d'acquisition 1001 est réalisée en une seule fois, l'appareil 91 ayant été disposé en un seul point de l'espace interne 11.

Toutefois, il est préférable que l'étape d'acquisition 1001 soit réalisée en plusieurs sous-étapes, l'appareil 91 étant disposé dans en une localisation différente dans l'espace interne 11 à chaque sous-étape. Ceci peut permettre d'obtenir une acquisition avec une résolution satisfaisante sur l'ensemble de la paroi porteuse verticale 12. Bien entendu, dans ce cas, les mesures 50 obtenues à chaque sous-étape sont post-traitées de telle sorte qu'elles soient toutes exprimées dans un même repère de l'espace.

En tout état de cause, à l'issue de l'étape d'acquisition 1001, on dispose d'un grand nombre de mesures 50, exprimées dans un même repère de l'espace. Selon un mode de réalisation, comme représenté schématiquement sur la [Fig.5], les mesures 50 sont exprimées dans un même repère orthogonal cartésien (x₁, y₁, z₁), dont l'origine A₁ est fixée arbitrairement. La troisième coordonnée z₁ est de préférence exprimée le long d'un axe correspondant précisément à la direction G (cf. [Fig.4] et [Fig.5]) du champ de gravité terrestre local, c'est-à-dire du champ de gravité terrestre à l'emplacement de la structure porteuse 10. La direction G du champ de gravité terrestre local peut avoir été acquise pendant l'étape 1001 au moyen d'un capteur 92 approprié, par exemple intégré à l'appareil 91 (cf. [Fig.4]). On précise que bien que les figures 4 et 5 représentent à titre d'explication quelques mesures 50, le résultat de l'étape d'acquisition 1001 peut comprendre un très grand nombre de mesures 50, de l'ordre de 10⁷ à 10⁹ mesures 50 dans le cas d'une structure porteuse 10 présentant des dimensions internes de l'ordre de 10¹ mètres. Le nombre de mesures 50 dépend, comme cela est connu, des paramètres de balayage de l'appareil 91 et du nombre de sous-étapes de l'étape d'acquisition 1001.

Après l'étape d'acquisition 1001, on met en œuvre un procédé de contrôle de géométrie 100 (ci-après désigné par « le procédé 100 »), dont les étapes sont décrites ci-après. Selon un mode de réalisation, le procédé de contrôle de géométrie 100 est mis en œuvre par un ordinateur exécutant un programme d'ordinateur approprié. Toutefois, le procédé 100 peut être mis en œuvre par toute combinaison appropriée de matériel et de logiciel, y compris dans un environnement informatique distribué.

Le procédé 100 comprend une première étape 101 consistant à spécifier un modèle auquel on va comparer la structure porteuse 10.

Dans le modèle, il est spécifié le nombre N des côtés du polygone qui doit servir de directrice à la paroi porteuse verticale 12. N est un nombre entier supérieur ou égal à 3. Par exemple, N est un nombre pair. Plus particulièrement, N est par exemple un nombre pair compris entre 8 et 56. Dans un mode de réalisation particulier illustré sur les dessins, N est égal à 8. Dans un autre mode de réalisation particulier, N est égal à 56.

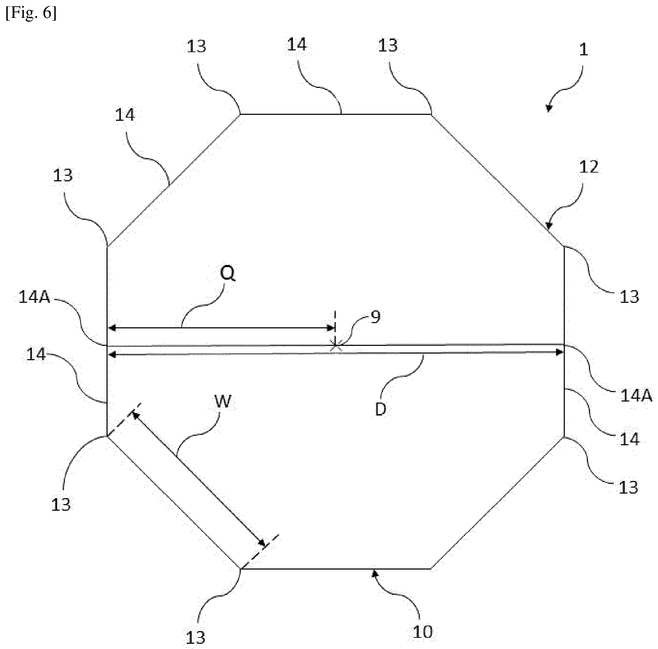

Dans ce qui suit, le rayon Q, le diamètre D, la largeur de pan W, l'ovalisation OV et la non-verticalité d'arête NV désignent des grandeurs physiques de la structure porteuse 10. Le modèle inclut des attributs dimensionnels, dont notamment des plages de valeurs acceptables pour chacune de ces grandeurs. Les figures 6 à 8 illustrent ces grandeurs dans la structure porteuse 10.

La [Fig.6] illustre à titre d'explication le rayon Q et le diamètre D. Comme la [Fig.1], la [Fig.6] est une vue en coupe de la structure porteuse 10, prise perpendiculairement à un axe vertical de la paroi porteuse verticale 12. L'axe vertical porte la référence 9 sur la [Fig.6]. À chaque pan vertical 14, on peut associer un point médian 14A situé dans le plan de coupe de la [Fig.6]. Le rayon Q est la distance entre le point médian 14A et l'axe vertical 9 dans ce plan de coupe. Le diamètre D est la distance entre les points médians 14A de deux pans verticaux 14 diamétralement opposés.

La [Fig.6] illustre aussi à titre d'explication la largeur de pan W. Un pan vertical 14 étant considéré, la largeur de pan W associée à ce pan vertical est la distance, dans le plan de coupe de la [Fig.6], entre les deux arêtes verticales 13 délimitant le pan 14.

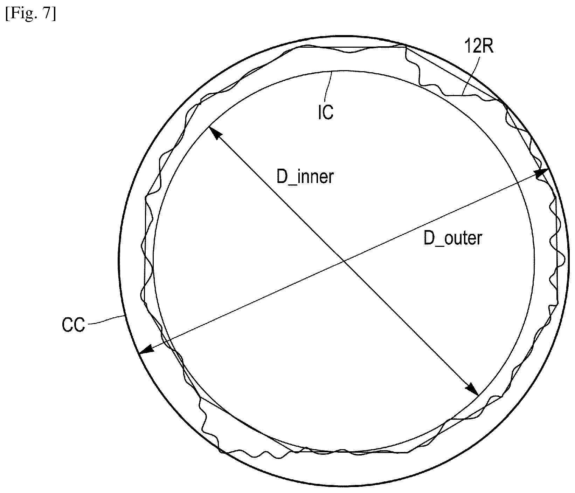

La [Fig.7] illustre à titre d'explication l'ovalisation OV. Comme la [Fig.1] et la [Fig.6], la [Fig.7] est une vue en coupe de la structure porteuse 10, prise perpendiculairement à l'axe vertical 9. Compte tenu d'un contour réel 12R de la paroi porteuse verticale 12 dans le plan de coupe de la [Fig.7], on peut définir un plus grand cercle inscrit IC dans ce contour réel 12R et un plus petit cercle circonscrit CC du contour réel 12R. Le plus grand cercle inscrit IC présente un diamètre noté D_inner et le plus petit cercle circonscrit CC présente un diamètre D_outer. L'ovalisation OV est la différence entre ces deux diamètres, c'est-à-dire que OV = D_outer - D_inner.

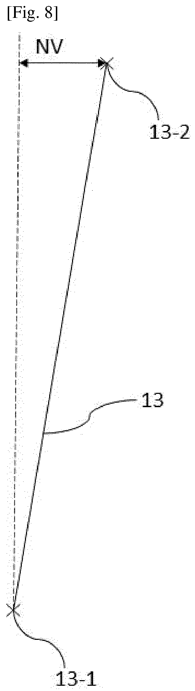

La [Fig.8] illustre à titre d'explication la non-verticalité d'arête NV. La [Fig.8] est une vue schématique de face d'une arête 13 séparant deux pans verticaux 14 (non représentés sur la [Fig.8]). Étant donné deux points d'extrémité 13-1 et 13-2 de l'arête 13, la non-verticalité d'arête NV est la valeur absolue d'une distance, perpendiculairement à l'axe vertical 9, entre les points d'extrémité 13-1 et 13-2. On précise que les points d'extrémité 13-1 et 13-2 peuvent être des points de l'arête 13 dans deux plans de référence, espacés parallèlement à l'axe vertical 9, dans la paroi porteuse verticale 12.

La plage acceptable pour chacune des grandeurs mentionnées ci-dessus peut être spécifiée sous la forme d'un intervalle de grandeurs numériques. En variante, une plage acceptable peut être spécifiée sous la forme d'une valeur de référence V et d'une tolérance T sur cette valeur de référence V ; la plage acceptable est alors l'intervalle compris entre V-T et V+T, cet intervalle pouvant être ouvert, fermé ou semi-fermé, selon les besoins de l'implémentation. Lorsque la valeur de référence V est une valeur non nulle, la tolérance T peut notamment être spécifiée sous la forme d'un pourcentage de V. En ce qui concerne le diamètre D, le rayon Q, la largeur de pan W, la valeur de référence est une valeur non nulle spécifiée à l'avance compte tenu des dimensions et proportions souhaitées de la structure porteuse 10, et les tolérances sont des valeurs non nulles spécifiées à l'avance compte tenu des tolérances acceptables sur ces dimensions et proportions souhaitées de la structure porteuse 10. En ce qui concerne l'ovalisation OV et la non-verticalité d'arête NV, la valeur de référence est nulle, et la tolérance est une valeur non nulle spécifiée à l'avance.

Les attributs géométriques et/ou les attributs dimensionnels du modèle peuvent être spécifiées par un utilisateur, par exemple au moyen d'une interface utilisateur implémentée sur ordinateur. En variante, le modèle peut aussi avoir été spécifié à l'avance sous forme d'un fichier de paramètres, éventuellement éditable par l'utilisateur. Avantageusement, les plages acceptables sont éditables par l'utilisateur. En particulier, lorsque les tolérances sont spécifiées sous forme d'un pourcentage comme on l'a mentionné ci-dessus, le pourcentage est avantageusement éditable par l'utilisateur. Ceci permet à l'utilisateur d'opérer un contrôle plus rigoureux ou bien plus laxiste de la conformité de la structure porteuse 10 à contrôler, en modifiant le pourcentage. Un contrôle plus rigoureux utilisera un pourcentage plus faible, par exemple avantageusement 10%, 5% ou 3%, ce qui revient à accepter un écart par rapport à la valeur de référence de 10% ou moins, 5% ou moins, ou 3% ou moins. Un contrôle plus laxiste utilisera un pourcentage plus élevé, par exemple avantageusement 15%, 20% ou 25%, ce qui revient à accepter un écart par rapport à la valeur de référence de 15% ou moins, 20% ou moins, ou 25% ou moins. En tout état de cause, pour chacune des grandeurs mentionnées ci-dessus, la plage acceptable spécifie l'écart qui sera accepté entre le modèle et la structure porteuse 10 à contrôler.

Le procédé 100 comprend en outre une étape 102 dans laquelle on fournit les mesures 50 décrites ci-dessus, réalisées sur la structure porteuse 10 à contrôler. Concrètement, les mesures 50 sont fournies sous la forme d'un fichier informatique, sur un support de données ou via une interface réseau. Par exemple le fichier informatique est fourni sous le format de fichier .pts bien connu dans le domaine des appareils de télédétection par laser.

Le procédé 100 comprend en outre une étape 103 dans laquelle on détermine, à partir des mesures 50, un système de coordonnées cylindriques (r, θ, z).

Comme cela est connu, définir un système de coordonnées cylindriques suppose de définir un axe vertical le long duquel on mesure une coordonnée z et des coordonnées polaires r, θ perpendiculairement à cet axe vertical. Ainsi, dans la mise en œuvre de l'étape 103, il convient d'abord de définir un axe vertical le long duquel on mesure la coordonnée z.

Dans ce but, le repère orthogonal cartésien (x₁, y₁, z₁) mentionné ci-dessus dans lequel sont exprimées les mesures 50 est défini de telle sorte que son axe vertical Z₁ soit parallèle à la direction G du champ de gravité terrestre local. L'axe vertical 19 du système de coordonnées cylindrique est choisi parallèle à l'axe vertical Z₁. On comprend bien que l'axe vertical 19 est ainsi parallèle ou quasiment parallèle à l'axe vertical 9 de la structure porteuse 10 à contrôler.

En outre, la position de l'axe vertical 19 présente une position qui minimise une dispersion selon la coordonnée radiale r des mesures 50. On comprend bien que l'axe vertical 19 est ainsi très proche de l'axe vertical 9 de la structure porteuse 10 à contrôler. En outre, comme on va le détailler ci-après, les arêtes 13 sont ainsi précisément les endroits où existent des maxima locaux de la coordonnée radiale r.

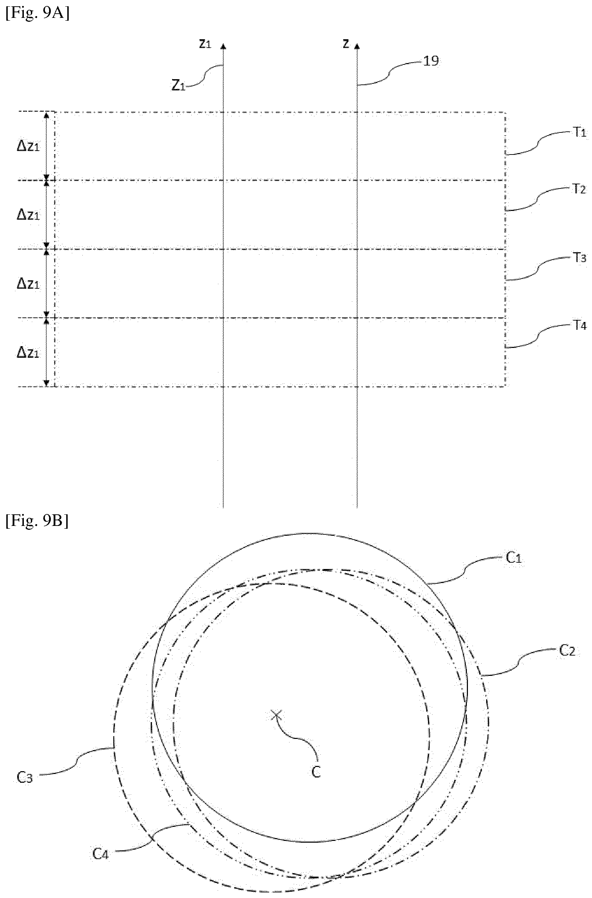

Diverses méthodes mathématiques sont appropriées pour trouver une position de l'axe vertical 19 qui minimise une dispersion selon la coordonnée radiale r des mesures 50. Dans un exemple simple d'exécution, comme représenté schématiquement sur la [Fig.9A], on sélectionne plusieurs (ici, quatre) sous-ensembles T₁, T₂, T₃, T₄ de mesures 50, les sous-ensembles T₁, T₂, T₃, T₄ étant définis par des incréments Δz₁ de coordonnées verticales z₁ ; et on calcule pour chaque sous-ensemble T₁, T₂, T₃, T₄ un cercle d'interpolation C₁, C₂, C₃, C₄ (cf. [Fig.9B]) associé et perpendiculaire à l'axe vertical Z₁, puis on calcule un barycentre C des centres des cercles C₁, C₂, C₃, C₄. L'axe vertical 19 est défini comme passant par ce barycentre C et étant parallèle à l'axe vertical Z₁.

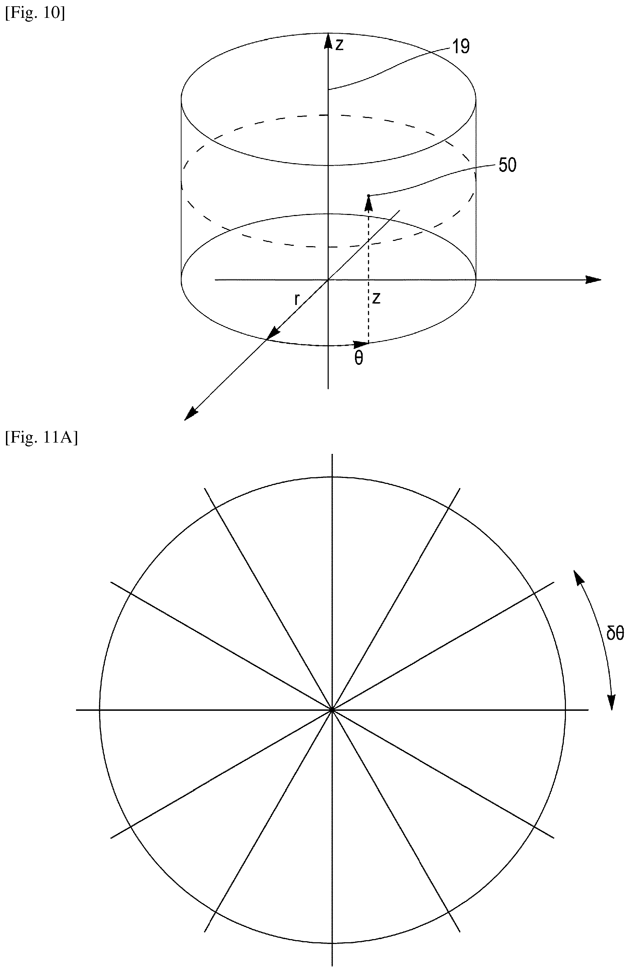

Ensuite, les coordonnées cartésiennes des mesures 50 dans le repère cartésien (x₁, y₁, z₁) (cf. [Fig.5]) sont converties par le calcul en coordonnées cylindriques (r, θ, z) (cf. [Fig.10]) selon les relations mathématiques connues. Le choix de la direction dans laquelle θ = 0° peut être ou bien fait arbitrairement, ou bien être fait en fonction de la position d'un repère tracé sur l'un des pans 14 ou d'un élément structurel préalablement choisi sur l'un des pans 14. Le sens positif de l'axe vertical 19 est choisi de préférence contraire au sens de l'accélération de la gravité terrestre.

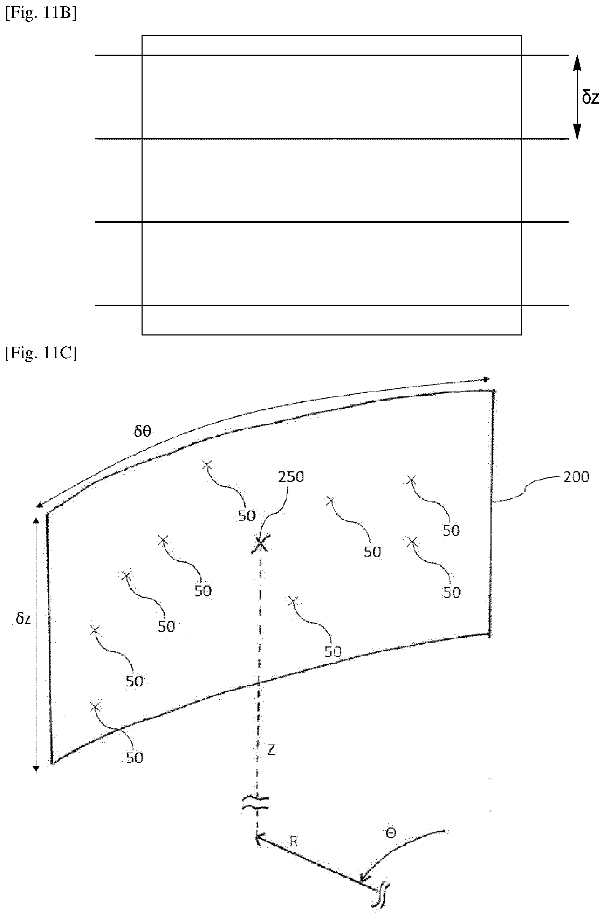

Le procédé 100 comprend en outre une étape 104 dans laquelle on spécifie des secteurs disjoints 200 (cf. [Fig.11C]) de l'espace dans le système de coordonnées cylindriques (r, θ, z). Concrètement, ces secteurs 200 sont définis par un incrément δθ de coordonnées θ (cf. [Fig.11A] et [Fig.11C]) et par un incrément δz de coordonnées z (cf. [Fig.11B] et [Fig.11C]).

Comme les grandeurs numériques du modèle décrit ci-dessus en rapport à l'étape 101, les incréments δθ et δz peuvent être spécifiés par un utilisateur, par exemple au moyen d'une interface utilisateur implémentée sur ordinateur. En variante, le modèle peut aussi avoir été spécifié à l'avance sous forme d'un fichier de paramètres, éventuellement éditable par l'utilisateur. Les incréments δθ et δz peuvent être spécifiés a priori grâce à une connaissance de la valeur de référence Q₀ du rayon Q décrit ci-dessus. Par exemple les incréments δθ et δz peuvent être spécifiés de telle sorte qu'une superficie de la paroi porteuse verticale 12 incluse dans un secteur 200 donné soit comprise entre 1 cm² et 10 cm².

Le procédé 100 comprend en outre une étape 105 dans laquelle, à partir des mesures 50, on calcule des points de discrétisation 250, dont un est représenté à titre d'illustration sur la [Fig.11C]. Plus concrètement, il est calculé un point de discrétisation 250 par secteur 200. À chaque secteur 200, il est associé une plage de coordonnées cylindriques {Θ ± δθ/2, Z ± δz/2}. Le point de discrétisation 250 est le centre du secteur 200. Ses coordonnées cylindriques sont {R, Θ, Z}, où R est la moyenne des coordonnées r de toutes les mesures 50 se situant dans le secteur 200.

Le procédé 100 comprend en outre une étape 106 dans laquelle, à partir des points de discrétisation 250 calculés à l'étape 105, on calcule des positions estimées 300 des N arêtes verticales 13.

Ce calcul peut être effectué d'un grand nombre de manières. Avantageusement, ce calcul consiste à rechercher, grâce à la connaissance de la valeur de référence W₀ de la largeur de pan W décrite ci-dessus, un ensemble de N droites verticales 13 approximativement espacées de W₀ et dont les positions correspondent à N maxima locaux de r.

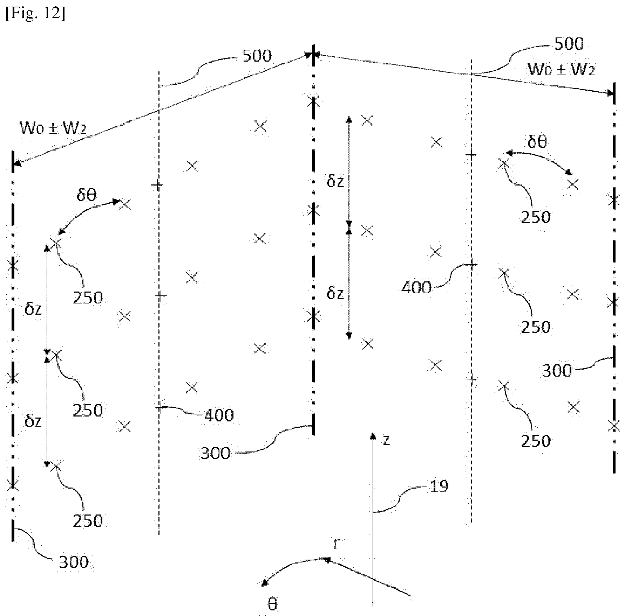

On comprendra mieux le principe d'un tel calcul en se référant à la [Fig.12]. Sur cette figure, on a représenté très schématiquement, dans le système de coordonnées cylindriques (r, θ, z), quelques-uns des points de discrétisation 250 calculés à l'étape 105, ensemble avec des positions estimées 300 des N arêtes verticales 13. Le calcul consiste à rechercher une position d'un ensemble de N droites verticales 300 sous contrainte des deux critères suivants :
- (i) chacune des N droites 300 est suffisamment voisine de maxima locaux de r en fonction de θ ;
- (ii) chaque droite 300 est séparée d'une droite 300 voisine d'une distance (perpendiculairement à l'axe vertical 19 du système de coordonnées cylindriques (r, θ, z)) qui est incluse dans l'intervalle [W₀ - W₂ ; W₀ + W₂], où W₂ est une valeur non nulle.

On notera que W₂ n'est pas nécessairement égale à la valeur de la tolérance sur W₀ ; au contraire, W₂ peut par exemple être choisie égale à 2,5 fois ou 3,0 fois cette tolérance. Le critère (ii) peut alors permettre d'empêcher qu'une dépression locale sur l'un des pans verticaux 14 soit considérée à tort comme une arête verticale 13. On notera également que les droites 300 ne passent pas nécessairement par des points de discrétisation 250, et peuvent même ne passer par aucun point de discrétisation 250.

En tout état de cause, à l'issue de l'étape 106, on dispose des positions estimées 300 des arêtes verticales 13. Le procédé 100 comprend en outre une étape 107 dans laquelle, à partir des positions estimées 300 des arêtes verticales 13, on calcule des positions estimées de N médianes 500 des pans verticaux 14 de la structure porteuse 10 à contrôler. Dans un exemple d'exécution, toujours en référence à la [Fig.12], cette étape 107 comprend calculer les positions de points 400 qui sont équidistants, perpendiculairement à l'axe vertical 19, des droites 300. De préférence, afin de simplifier le calcul, les positions des points 400 sont calculées à la même coordonnée z que des points de discrétisation 250. S'il s'avère qu'à cette coordonnée z, un point 400 ne coïncide pas avec un point de discrétisation 250, la coordonnée r de ce point 400 est calculée par interpolation (par exemple par interpolation linéaire) à partir des coordonnées de points de discrétisation 250 voisins. Les positions des médianes 500 sont ensuite calculées par interpolation, à partir des positions des points 400.

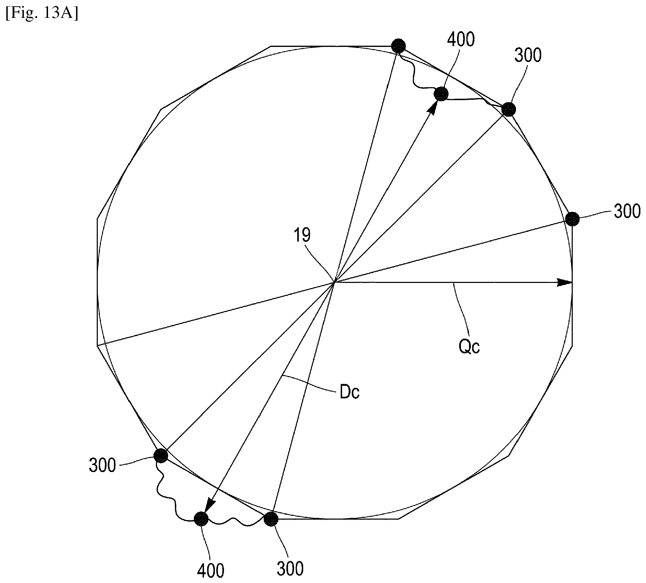

Le procédé 100 comprend en outre une étape 108 dans laquelle, à partir des positions estimées des médianes calculées à l'étape 107, on compare des distances entre des médianes diamétralement opposées avec la plage acceptable de diamètre D. En référence à la [Fig.13A], ce calcul peut consister à calculer une distance D_{c} entre deux points 400 diamétralement opposés situés dans un même plan vertical (autrement dit situés à la même coordonnée z), et à contrôler que cette distance D_{c} tombe dans la plage acceptable de diamètre D.

Certaines ou tous des comparaisons énumérées ci-après peuvent également être effectuées lors de l'étape 108.

Notamment, en référence à la [Fig.13A], à partir des positions estimées des médianes 500 calculées à l'étape 107, et plus spécifiquement des positions des points 400, on compare les distances Q_{c} entre l'axe vertical 19 et chacun des N points 400 avec la plage acceptable de rayon Q.

En outre, toujours en référence à la [Fig.13A], on calcule les distances entre les positions estimées 300 des arêtes verticales 13 calculées à l'étape 106, et on compare ces distances avec la plage acceptable de largeur de pan W.

En outre, en revenant à la [Fig.7], on calcule les positions et les diamètres D_inner et D_outer du plus grand cercle inscrit IC et du plus petit cercle circonscrit CC, on calcule la valeur de l'ovalisation OV = D_outer - D_inner, et on compare cette valeur calculée avec la plage acceptable d'ovalisation OV.

En outre, à partir des droites 300 calculées à l'étape 106, on calcule les positions de deux points d'extrémité situés sur les droites 300, on calcule la valeur absolue de la distance NV, perpendiculairement à l'axe vertical 19, entre ces deux points d'extrémité, et on compare NV avec la plage acceptable de non-verticalité d'arête.

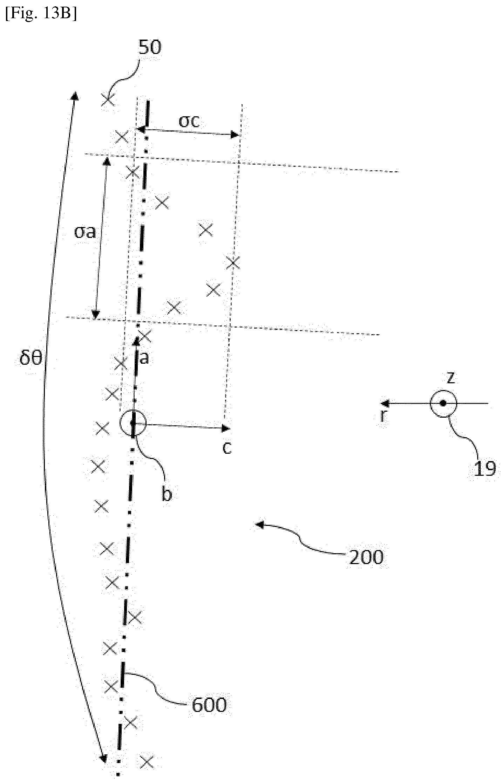

En outre, on compare des déformations locales des pans porteurs verticaux 14 avec une plage acceptable de déformation locale des pans porteurs verticaux 14, qui a été préalablement spécifiée à l'étape 101. Cette comparaison va être expliquée plus en détail en référence à la [Fig.13B]. Pour un secteur 200 donné, à partir de toutes les mesures 50 incluses dans ce secteur 200, il est calculé un plan d'interpolation locale 600. Ensuite, il est associé à ce plan 600 un repère cartésien local (a, b, c) qui est orthogonal et défini de la façon suivante : l'axe (c) est perpendiculaire au plan 600 ; l'axe (b) est parallèle à l'axe vertical 19 du système de coordonnées cylindriques (r, θ, z) ; et l'axe (a) est orthogonal aux axes (b) et (c). Ensuite, les coordonnées des mesures 50 sont exprimées dans ce repère cartésien local (a, b, c) selon les relations mathématiques connues.

Ensuite, une valeur σa ayant été spécifiée, on recherche dans le secteur 200 les mesures 50 dont les coordonnées (a) sont incluses dans un intervalle de largeur σa (cf. [Fig.13B]) ; parmi ces mesures 50, on recherche les deux mesures 50 les plus éloignées du plan 600, perpendiculairement à l'axe (c), l'une dans la direction positive de l'axe (c) et l'autre dans la direction négative de l'axe (c) ; on calcule la différence σc entre les coordonnées suivant l'axe (c) de ces deux mesures 50 ; et on compare cette différence σc avec la plage acceptable de déformation locale. Ce processus est répété jusqu'à épuisement du secteur 200, en décalant à chaque fois l'intervalle de largeur σa d'un incrément fixe ; autrement dit, l'intervalle de largeur σa est utilisé comme fenêtre glissante, laquelle peut être d'une largeur quelconque selon l'axe (b) du repère cartésien local (a, b, c). Les opérations qui précèdent sont répétées pour chacun des secteurs 200.

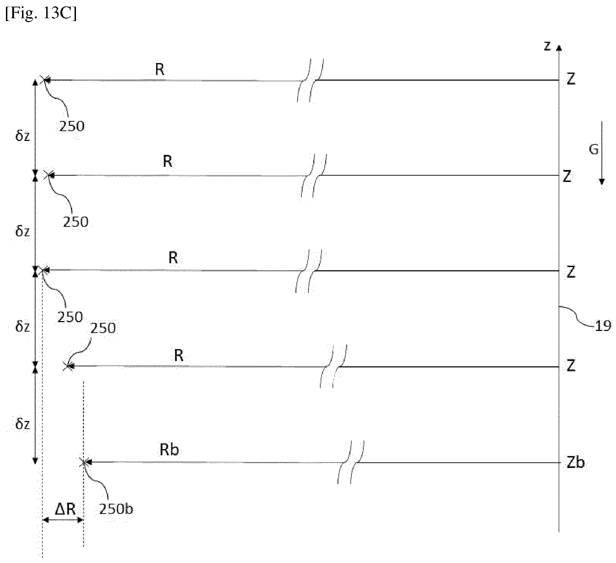

En outre, on calcule un écart de coordonnée radiale entre tous les points de discrétisation 250 ayant une même coordonnée azimutale Θ et le plus bas d'entre eux et on compare cet écart avec une plage acceptable de non-verticalité des pans porteurs verticaux 14, qui a été préalablement spécifiée à l'étape 101. Cette comparaison va être expliquée plus en détail en référence à la [Fig.13C]. Parmi tous les points de discrétisation 250 ayant une coordonnée Θ donnée, on obtient la coordonnée radiale Rb du point de discrétisation 250b qui présente la plus petite coordonnée Zb suivant l'axe vertical 19. Ensuite, pour chaque point de discrétisation 250 ayant la même coordonnée Θ, on calcule l'écart de coordonnée radiale ΔR = R - Rb, et on compare ΔR avec la plage acceptable de non-verticalité des pans porteurs verticaux 14. Les opérations qui précèdent sont répétées pour chaque coordonnée Θ entre 0 et 360°.

En variante, l'écart ΔR peut n'être calculé que pour certains points de discrétisation 250 ayant une coordonnée Θ donnée. En variante, l'écart ΔR peut n'être calculé que pour certains points de discrétisation 250 ayant une coordonnée Z incluse dans une ou plusieurs plages données. Ceci peut permettre d'évaluer la non-verticalité des pans porteurs verticaux 14 sur des zones particulières de ceux-ci, et/ou d'éviter que l'évaluation de la non-verticalité des pans porteurs verticaux 14 soit faussée par le raccordement entre la paroi porteuse de fond 15 et les pans porteurs verticaux 14, plus particulièrement lorsque ce raccordement présente la forme d'un chanfrein. En variante, l'écart de coordonnée radiale ΔR peut être calculé avec la coordonnée radiale d'un autre point de discrétisation 250 que le point de discrétisation 250b.

Le procédé 100 peut optionnellement comprendre une étape 109 de génération d'au moins une représentation visuelle de la conformité de la structure porteuse des résultats des contrôles effectués à l'étape 108. Par exemple cette représentation visuelle peut comprendre ou consister en des graphes indiquant par des couleurs les régions de la paroi porteuse verticale 12 où les divers paramètres calculés à l'étape 108 ne tombent pas dans les plages acceptables spécifiées à l'étape 101. Pour cela, plus concrètement, pour chaque secteur 200 de la paroi porteuse verticale 12 et pour chaque paramètre calculé à l'étape 108, une variable booléenne est calculée, et prend la valeur NON (pour non-conforme) si le paramètre ne tombe pas dans la plage acceptable associée spécifiée à l'étape 101, et OUI (pour conforme) sinon. En complément ou en alternative, la représentation visuelle peut comprendre ou consister en des graphes indiquant par des couleurs les divers paramètres calculés à l'étape 108 sur une représentation graphique de la paroi porteuse verticale 12.

Dans une étape 1010 du procédé 1000, la ou les représentations visuelles générées à l'étape 109 peuvent être affichées à un utilisateur, ce qui permet à celui-ci d'avoir des informations utilisables pour décider d'actions correctives à entreprendre sur la paroi porteuse verticale 12. Le procédé peut aussi aboutir à générer une qualification de conformité choisie parmi conforme et non-conforme, par exemple une variable booléenne. Dans un exemple, la variable booléenne peut prendre la valeur OUI (pour conforme) si un pourcentage de secteurs 200 non-conformes de la paroi porteuse verticale 12 est inférieur à un pourcentage prédéterminé, et prendre la valeur NON (pour non-conforme) sinon.

Jusqu'ici, on n'a décrit qu'un contrôle de géométrie de la paroi porteuse verticale 12. Toutefois, comme mentionné précédemment, la structure porteuse 10 peut également comporter une paroi porteuse de fond. On décrit ci-après une variante du procédé 100 qui est applicable dans le cas où cette paroi porteuse de fond 15 (cf. [Fig.4]) est plane.

Dans cette variante, à l'étape d'acquisition 1001, l'appareil 91 acquiert en outre pluralité de mesures 51 (cf. [Fig.4]), où chaque mesure 51 représente une position en trois dimensions mesurée d'un point situé sur la paroi porteuse de fond 15 de la structure porteuse 10 à contrôler. À l'étape 102, ces mesures 51 sont fournies en même temps que les mesures 50.

Les mesures 51 sont exprimées dans le même repère orthogonal cartésien (x₁, y₁, z₁) que les mesures 50.

À l'étape 103, les coordonnées cartésiennes des mesures 51 dans le repère cartésien (x₁, y₁, z₁) (cf. [Fig.5]) sont converties par le calcul, selon les relations mathématiques connues, en coordonnées cartésiennes dans un système de coordonnées cartésiennes (x, y, z) dont l'axe vertical z coïncide avec l'axe vertical 19 du système de coordonnées cylindriques pour les mesures 50.

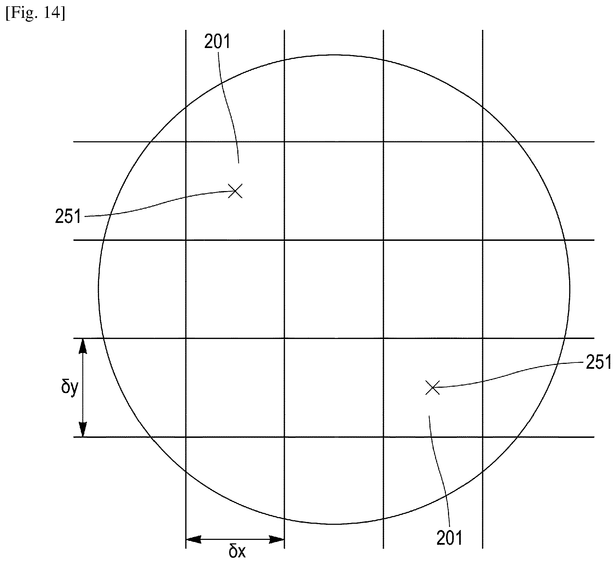

À l'étape 104, on spécifie en outre des secteurs disjoints 201 de l'espace dans le système de coordonnées cartésiennes (x, y, z). Concrètement, ces secteurs 201 sont définis par un incrément δx de coordonnées x et par un incrément δy de coordonnées y (cf. [Fig.14]). Comme les grandeurs numériques du modèle décrit ci-dessus en rapport à l'étape 101, les incréments δx et δy peuvent être spécifiés par un utilisateur, par exemple au moyen d'une interface utilisateur implémentée sur ordinateur. En variante, le modèle peut aussi avoir été spécifié à l'avance sous forme d'un fichier de paramètres, éventuellement éditable par l'utilisateur. Les incréments δx et δy peuvent être spécifiés a priori grâce à une connaissance de la valeur de référence Q₀ du rayon Q décrit ci-dessus. Par exemple les incréments δx et δy peuvent être spécifiés de telle sorte qu'une superficie de la paroi porteuse de fond 15 incluse dans un secteur 201 donné soit comprise entre 5 cm² et 50 cm².À l'étape 105, toujours en référence à la [Fig.14], il est calculé un point de discrétisation 251 par secteur 201. À chaque secteur 201, il est associé une plage de coordonnées cartésiennes {X ± δx/2, Y ± δy/2}. Le point de discrétisation 251 est le centre du secteur 201. Ses coordonnées cartésiennes sont {X, Y, Z}, où Z est la moyenne des coordonnées z de toutes les mesures 51 se situant dans le secteur 201.

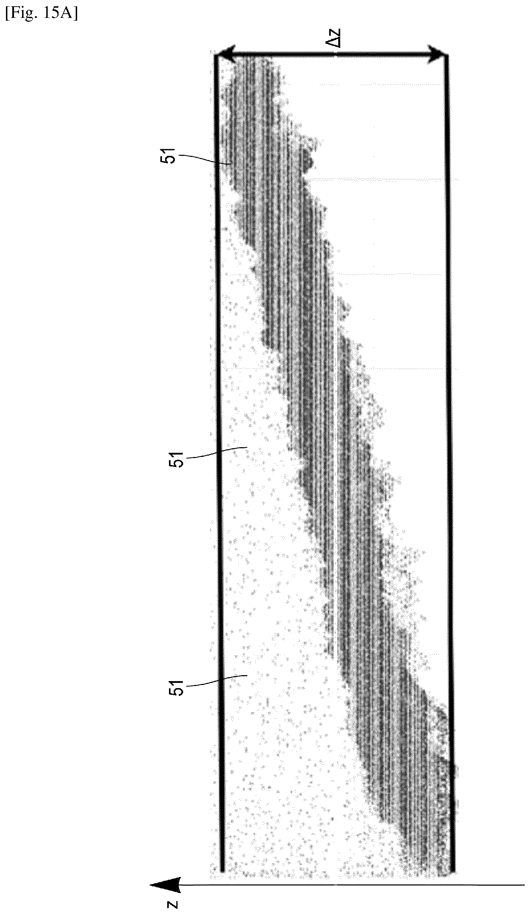

À l'étape 108, on calcule une dispersion Δz, suivant l'axe vertical z, des mesures 51 ; autrement dit, on calcule la différence entre la coordonnée z la plus élevée et la coordonnée z la plus faible des mesures 51. En référence à la [Fig.15A], qui est un graphe représentant une distribution statistique des coordonnées z des mesures 51 dans un exemple, on comprend que plus Δz est élevé, plus haute est la plus haute aspérité de la paroi porteuse de fond 15. Δz est donc un paramètre qui quantifie la non-planéité de la paroi porteuse de fond 15. Toujours à l'étape 108, on compare Δz avec une plage acceptable de non-planéité de la paroi porteuse de fond 15, qui a été préalablement spécifiée à l'étape 101.

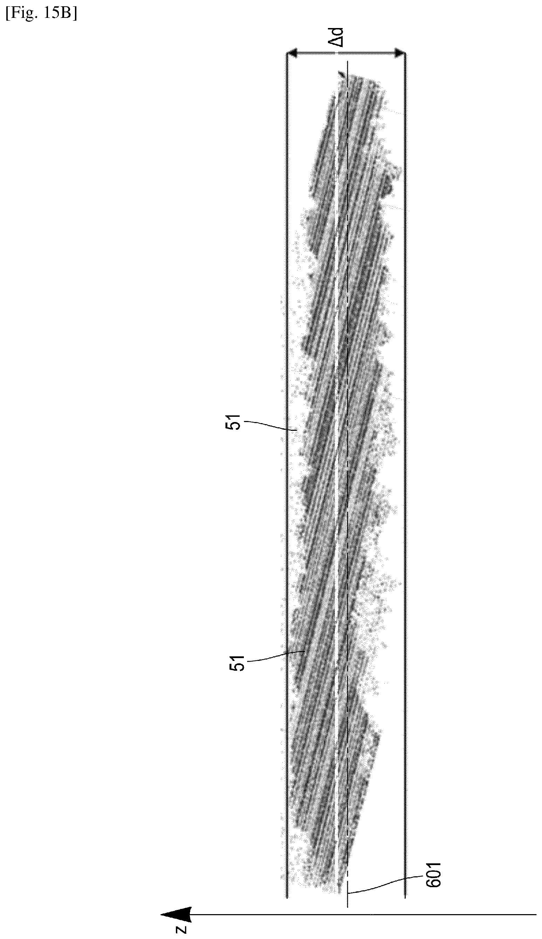

À l'étape 108, on calcule également un plan d'interpolation global 601 à partir de toutes les mesures 51 (cf. [Fig.15B]). Ensuite, on recherche les deux mesures 51 les plus éloignées du plan 601, parallèlement à l'axe vertical z, l'une dans la direction positive de l'axe vertical z et l'autre dans la direction négative de l'axe z ; et on calcule la différence Δd entre les coordonnées z de ces deux mesures 51. En référence à la [Fig.15B], qui est un graphe représentant une distribution statistique des coordonnées z des mesures 51 dans un autre exemple, on comprend que de cette manière, Δd quantifie la non-planéité de la paroi porteuse de fond 15 d'une façon différente de Δz. Toujours à l'étape 108, on compare Δd avec une plage acceptable de non-planéité de la paroi porteuse de fond 15, qui peut ou non être identique à celle à laquelle on compare Δz.

En variante, une seule des dispersions Δz ou Δd peut être calculée.

De façon avantageuse, la dispersion Δz peut n'être calculée que sur les mesures 51 qui sont situées suffisamment loin des pans porteurs verticaux 14. Plus concrètement, grâce à la connaissance a priori de la valeur de référence Q₀ du rayon Q, on peut exclure du calcul de la dispersion Δz les mesures 51 dont la coordonnée cylindrique r vérifie r > R₀ - R₂ où R₂ est un seuil prédéterminé. Il en est avantageusement de même pour la dispersion Δd. Ceci peut permettre d'éviter que l'évaluation de la non-planéité de la paroi porteuse de fond 15 tienne compte du raccordement entre la paroi porteuse de fond 15 et les pans porteurs verticaux 14, plus particulièrement lorsque ce raccordement présente la forme d'un chanfrein.

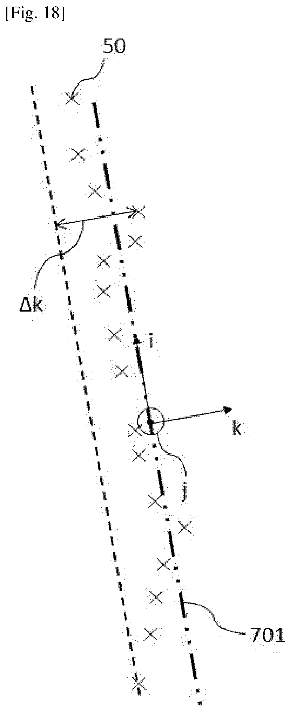

Une comparaison analogue avec une plage acceptable de non-planéité des pans porteurs verticaux 14 peut en outre être effectuée à l'étape 108. À partir des positions estimées 300 des arêtes verticales 13 calculées à l'étape 106, on sélectionne toutes les mesures 50 correspondant à un pan porteur vertical 14 donné, et on calcule un plan d'interpolation global 701 (cf. [Fig.18]) à partir des mesures 50 ainsi sélectionnées. Il est à noter que le plan d'interpolation global 701 n'est pas nécessairement parallèle au plan d'interpolation locale 600 représenté sur la [Fig.13B]. Ensuite, il est associé au plan d'interpolation global 701 un repère cartésien (i, j, k) qui est orthogonal et défini de la façon suivante : l'axe (k) est orthogonal au plan 701 ; et les axes (i) et (j) sont inclus dans le plan 701. Toujours en référence à la [Fig.18], on recherche parmi les mesures 50 ayant servi au calcul du plan 701 les deux mesures 50 les plus éloignées du plan 701, parallèlement à l'axe (k), l'une dans la direction positive de l'axe (k) et l'autre dans la direction négative de l'axe (k) ; et on calcule la différence Δk entre les coordonnées k de ces deux mesures 50. Toujours à l'étape 108, on compare Δk avec une plage acceptable de non-planéité des pans porteurs verticaux 14, qui a été préalablement spécifiée à l'étape 101. Il sera compris que de façon analogue à Δd, Δk quantifie la non-planéité du pan porteur vertical 14. En outre, il est bien entendu que Δk peut être calculé et comparé avec la plage acceptable de non-planéité des pans porteurs verticaux 14 pour un, certain ou tous des pans porteurs verticaux 14.

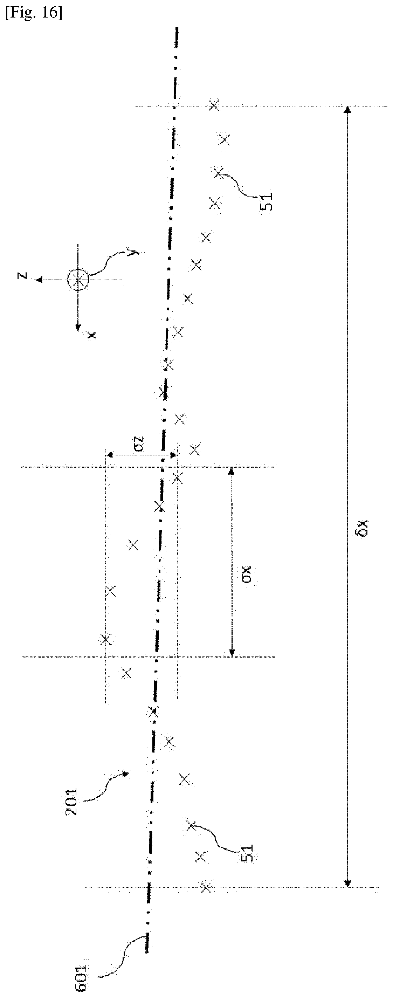

Le plan d'interpolation global 601 peut aussi être utilisé pour contrôler des déformations locales de la paroi porteuse de fond 15, comme on va le décrire en référence à la [Fig.16]. Pour un secteur 201 donné, une valeur σx ayant été spécifiée, on recherche les mesures 51 dont les coordonnées x sont incluses dans un intervalle de largeur σx (cf. [Fig.16]) ; parmi ces mesures 51, on recherche dans le secteur 201 les deux mesures 51 les plus éloignées du plan 601, parallèlement à l'axe vertical z, l'une dans la direction positive de l'axe vertical z et l'autre dans la direction négative de l'axe z ; on calcule une différence σz entre les coordonnées suivant l'axe vertical z de ces deux mesures 51 ; et on compare cette différence σz avec une plage acceptable de déformation locale de la paroi de fond, qui a été préalablement spécifiée à l'étape 101. Ce processus est répété jusqu'à épuisement du secteur 201, en décalant à chaque fois l'intervalle de largeur σx d'un incrément fixe ; autrement dit, l'intervalle de largeur σx est utilisé comme fenêtre glissante, laquelle peut être d'une largeur quelconque selon l'axe y du système de coordonnées cartésiennes (x, y, z). Les opérations qui précèdent sont répétées pour chacun des secteurs 201. En variante, les deux mesures 51 servant au calcul de σz peuvent être les deux mesures les plus éloignées d'un plan d'interpolation locale qui est calculé à partir de toutes les mesures 51 incluses dans le secteur 201. Il est à noter que ce plan d'interpolation locale n'est pas nécessairement parallèle au plan d'interpolation global 601.

Les principes décrits ci-dessus pour une paroi porteuse de fond 15 plane sont également applicables à une paroi de couvercle plane de la structure porteuse 10.

Les procédés de contrôle de géométrie décrits ci-dessus peuvent être appliqués à toute structure de génie civil ou toute structure mécano-soudée devant être construite en conformité avec le modèle spécifié.

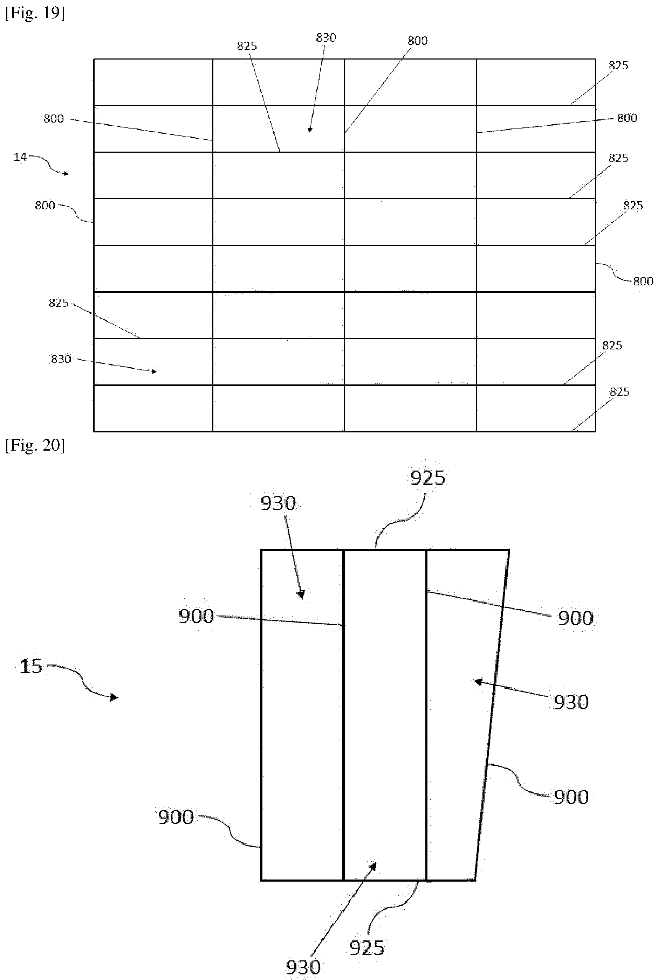

Comme on l'a mentionné ci-dessus, la paroi périphérique verticale 22 peut être formée de rangées verticales de modules de paroi isolants plans et de rangées verticales de modules de paroi isolants de coin comme décrit dans WO 2022/200536 A1 ou dans WO 2022/200539 A1. Comme décrit dans ces documents, la connaissance des positions tridimensionnelles des N arêtes verticales 13 permet de tracer, sur les pans porteurs verticaux 14, des lignes de repère verticales utilisables pour positionner les rangées verticales de modules de paroi isolants plans et les rangées verticales de modules de paroi isolants de coin sur les pans porteurs verticaux 14. Sur la [Fig.19], on a représenté schématiquement à titre d'explication, pour un pan porteur vertical 14, de telles lignes de repère verticales 800, ensemble avec des lignes de repère orthoradiales 825. En référence à la [Fig.19], les lignes de repère verticales 800 et les lignes de repère orthoradiales 825 délimitent ensemble des secteurs disjoints 830, chaque secteur 830 correspondant à l'emplacement prévu d'un module de paroi isolant plan ou d'un module de paroi isolant de coin sur le pan porteur vertical 14.

Selon une variante du procédé 100,
- à partir des positions estimées 300 des N arêtes verticales 13 calculées à l'étape 106 et des mesures 50, on calcule les positions des lignes de repère verticales 800 comme décrit dans WO 2022/200536 A1 ou dans WO 2022/200539 A1 ;
- à partir des positions calculées des lignes de repère verticales 800 et des dimensions prévues des modules isolants, on calcule en outre les positions des lignes de repère orthoradiales 825 ; et
- à l'étape 108, on compare des déformations locales des pans porteurs verticaux 14 avec la plage acceptable de déformation locale des pans porteurs verticaux 14 comme décrit ci-dessus, à ceci près que, à la place des secteurs 200, les secteurs 830 sont employés ou bien des secteurs d'un rayon prédéterminé autour du centre géométrique de chaque secteur 830.

De cette manière, la comparaison des déformations locales des pans porteurs verticaux 14 avec la plage acceptable de déformation locale des pans porteurs verticaux 14 est mieux indicative d'actions correctives à entreprendre sur la paroi porteuse verticale 12 pour que les modules de paroi isolant plans et les modules de paroi isolants de coin puissent être positionnés comme souhaité sur les pans porteurs verticaux 14.

Comme décrit dans WO 2022/200536 A1 ou dans WO 2022/200539 A1, la connaissance des positions tridimensionnelles des N arêtes verticales 13 permet en outre de tracer, sur la paroi porteuse de fond 15 plane, des lignes de repère horizontales utilisables pour positionner les secteurs angulaires images les uns des autres par rotation et des blocs isolants formant ces secteurs angulaires. Sur la [Fig.20], on a représenté schématiquement à titre d'explication de telles lignes de repère horizontales 900, ensemble avec des lignes de repère orthoradiales 925. En référence à la [Fig.20], les lignes de repère horizontales et les lignes de repère orthoradiales 925 délimitent ensemble des secteurs disjoints 930, chaque secteur 930 correspondant à l'emplacement prévu d'un bloc isolant sur la paroi porteuse de fond 15. Il est à noter que les secteurs 930 peuvent présenter diverses formes, notamment de rectangle, de trapèze, etc. La [Fig.20] n'est donc aucunement limitative à cet égard.

Selon une variante du procédé 100,
- à partir des positions calculées des lignes de repère verticales 800, on calcule les positions des lignes de repère horizontales 900 comme décrit dans WO 2022/200536 A1 ou dans WO 2022/200539 A1 ;
- à partir des positions calculées des lignes de repère horizontales 900 et des dimensions prévues des blocs isolants, on calcule en outre les positions des lignes de repère orthoradiales 925 ; et
- à l'étape 108, on compare des déformations locales de la paroi porteuse de fond plane 15 avec la plage acceptable de déformation locale de la paroi porteuse de fond comme décrit ci-dessus, à ceci près que, à la place des secteurs 201, les secteurs 930 sont employés ou bien des secteurs d'un rayon prédéterminé autour du centre géométrique de chaque secteur 930.

De cette manière, la comparaison des déformations locales de la paroi porteuse de fond plane 15 avec la plage acceptable de déformation locale de la paroi porteuse de fond est mieux indicative d'actions correctives à entreprendre sur la paroi porteuse verticale 12 pour que les blocs isolants puissent être positionnés comme souhaité sur la paroi porteuse de fond 15.

Puisque les secteurs 830, 930 correspondent à l'emplacement prévu de modules de paroi isolants ou de blocs isolants, les mesures 50, 51 incluses dans les secteurs 830, 930 peuvent en outre être utilisées pour calculer les dimensions d'éléments d'espacement. Par exemple, les éléments d'espacement comprennent des cales et/ou des cordons de mastic. Les éléments d'espacement sont destinés à rattraper des défauts de planéité des pans porteurs verticaux 14 et de la paroi porteuse de fond 15. Pour cela les éléments d'espacement sont positionnés entre un module de paroi isolant et un pan porteur vertical 14, ou entre un bloc isolant et la paroi porteuse de fond 15. Les dimensions des éléments d'espacement peuvent être calculées comme décrit dans WO 2023/073201 A1 par exemple.

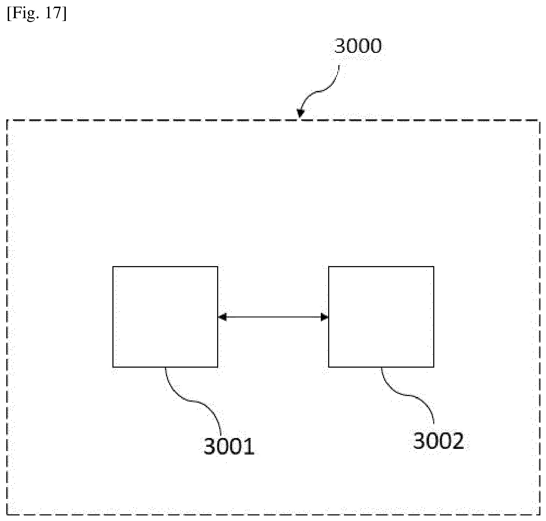

Les procédés de contrôle de géométrie décrits ci-dessus peuvent être mis en œuvre au moyen d'un dispositif de contrôle de géométrie 3000 (cf. [Fig.17]). Le dispositif de contrôle de géométrie 3000 comprend au moins un processeur 3001 et au moins une mémoire 3002 contenant un programme d'ordinateur ; la au moins une mémoire 3002 et le programme d'ordinateur sont configurés, avec ledit au moins un processeur 3001, pour causer l'exécution du procédé de contrôle de géométrie 100 décrit précédemment. Le dispositif de contrôle de géométrie 3000 peut être réalisé sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java (marque déposée) ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de contrôle de géométrie (100) mis en œuvre par ordinateur, comprenant :
- spécifier (101) un modèle de structure (10), le modèle de structure (10) comportant des attributs géométriques et des attributs dimensionnels, les attributs géométriques comportant un nombre N de côtés d'un polygone, N étant un nombre entier supérieur ou égal à 3, les attributs dimensionnels incluant une plage acceptable de diamètre (D) ;
- fournir (102) une pluralité de premières mesures (50) représentant chacune une position mesurée dans un repère en trois dimensions (x₁, y₁, z₁) d'un point situé sur une structure à contrôler ;
- déterminer (103) un système de coordonnées cylindriques (r, θ, z) présentant un axe vertical (19) parallèle à un axe dudit repère en trois dimensions, ledit axe vertical (19) présentant une position qui minimise une dispersion desdites premières mesures (50) selon une cordonnée radiale (r) dans ledit système de coordonnées cylindriques ;
- spécifier (104) des premiers secteurs disjoints (200) de l'espace dans le système de coordonnées cylindriques (r, θ, z), lesdits premiers secteurs (200) étant définis par des incréments de coordonnées azimutales (δθ) et des incréments de coordonnées axiales (δz) dans ledit système de coordonnées cylindriques (r, θ, z) ;
- calculer (105), à partir des premières mesures (50), une pluralité de premiers points de discrétisation (250), chaque premier point de discrétisation (250) représentant une position moyenne de la structure à contrôler dans l'un desdits premiers secteurs (200) ;
- calculer (106), à partir des premiers points de discrétisation (250), des positions estimées (300) de N arêtes verticales (13) de la structure à contrôler ;
- calculer (107), à partir des positions estimées (300) des N arêtes verticales (13), des positions estimées (400) de N médianes, chaque médiane étant une médiane d'un pan vertical (14) de la structure à contrôler ; et
- à partir des positions estimées des N médianes, comparer (108) des distances entre des médianes diamétralement opposées avec ladite plage acceptable de diamètre (D).

2. Procédé de contrôle de géométrie (100) selon la revendication 1, dans lequel les attributs dimensionnels incluent en outre une plage acceptable de rayon (Q), et dans lequel le procédé de contrôle de géométrie (100) comprend en outre comparer (108) des distances entre lesdites positions estimées (400) des N médianes et ledit axe vertical (19) avec ladite plage acceptable de rayon.

3. Procédé de contrôle de géométrie (100) selon l'une quelconque des revendications 1 à 2, dans lequel les attributs dimensionnels incluent en outre une plage acceptable de largeur de pan (W), et dans lequel le procédé de contrôle de géométrie (100) comprend en outre comparer (108) des distances entre les positions estimées (300) de deux arêtes verticales voisines (13) avec ladite plage acceptable de largeur de pan.

4. Procédé de contrôle de géométrie (100) selon l'une quelconque des revendications 1 à 3, dans lequel les attributs dimensionnels incluent en outre une plage acceptable de non-verticalité d'arête (NV), et dans lequel le procédé de contrôle de géométrie (100) comprend en outre comparer (108) des distances, perpendiculairement à l'axe vertical (19) dudit système de coordonnées cylindriques, entre des points d'extrémité de chaque arête verticale (13) avec ladite plage acceptable de non-verticalité d'arête (NV).

5. Procédé de contrôle de géométrie (100) selon l'une quelconque des revendications 1 à 4, dans lequel les attributs dimensionnels incluent en outre une plage acceptable d'ovalisation (OV), et dans lequel le procédé de contrôle de géométrie (100) comprend en outre comparer (108) une différence de diamètre entre un plus grand cercle inscrit (CI) de la paroi verticale (12) et un plus petit cercle circonscrit (CC) de la paroi verticale (12) de la structure à contrôler avec ladite plage acceptable d'ovalisation.

6. Procédé de contrôle de géométrie (100) selon l'une quelconque des revendications 1 à 5, dans lequel les attributs dimensionnels incluent en outre une plage acceptable de déformation locale des pans verticaux (14), et dans lequel le procédé de contrôle de géométrie (100) comprend en outre comparer des déformations locales de la structure à contrôler avec ladite plage acceptable de déformation locale des pans verticaux (14).

7. Procédé de contrôle de géométrie (100) selon l'une quelconque des revendications 1 à 6, dans lequel les attributs dimensionnels incluent en outre une plage acceptable de non-verticalité des pans verticaux (14), et dans lequel le procédé de contrôle de géométrie (100) comprend en outre :
- sélectionner un sous-ensemble des premiers points de discrétisation (250), dans lequel sous-ensemble les coordonnées azimutales (Θ) des premiers points de discrétisation (250) sont égales entre elles ;
- déterminer des écarts (ΔR) de coordonnée radiale (R) entre les premiers points de discrétisation (250) du sous-ensemble ; et
- comparer les écarts (ΔR) de coordonnée radiale (R) avec ladite plage acceptable de non-verticalité des pans verticaux (14).

8. Procédé de contrôle de géométrie (100) selon l'une quelconque des revendications 1 à 7, dans lequel les attributs dimensionnels incluent en outre une plage acceptable de non-planéité des pans verticaux (14), et le procédé de contrôle de géométrie (100) comporte en outre :
- à partir des positions estimées (300) des N arêtes verticales (13), sélectionner les premières mesures (50) correspondant à un pan vertical (14) de la structure à contrôler ;
- calculer un paramètre de non-planéité de pan vertical (Δk) à partir des premières mesures (50) sélectionnées, et comparer le paramètre de non-planéité de pan vertical (Δk) avec ladite plage acceptable de non-planéité des pans verticaux (14).

9. Procédé de contrôle de géométrie (100) selon l'une quelconque des revendications 1 à 8, dans lequel les attributs géométriques comportent en outre une paroi de fond plane, les attributs dimensionnels incluent en outre une plage acceptable de non-planéité de la paroi de fond, et le procédé de contrôle de géométrie (100) comporte en outre :
- fournir (102) une pluralité de deuxièmes mesures (51) représentant chacune une position mesurée dans ledit repère en trois dimensions (x₁, y₁, z₁) d'un point situé sur une paroi de fond (15) de la structure à contrôler ;
- associer (103) aux deuxièmes mesures (51) un système de coordonnées cartésiennes (x, y, z), ledit système de coordonnées cartésiennes présentant un premier axe, un deuxième axe et un troisième axe perpendiculaires entre eux, le troisième axe coïncidant avec ledit axe vertical (19) dudit système de coordonnées cylindriques ;
- spécifier (104) des deuxièmes secteurs disjoints (201) de l'espace dans ledit système de coordonnées cartésiennes, lesdits deuxièmes secteurs (201) étant définis par des incréments (δx, δy) de coordonnées selon le premier axe et le deuxième axe dudit système de coordonnées cartésiennes (x, y, z) ;
- calculer (105), à partir des deuxièmes mesures (51), une pluralité de deuxièmes points de discrétisation (251), chaque deuxième point de discrétisation (251) représentant une position moyenne de la paroi de fond (15) de la structure à contrôler dans l'un desdits deuxièmes secteurs (201) ;
- calculer (108) un paramètre de non-planéité de la paroi de fond (Δz ; Δd) à partir des deuxièmes points de discrétisation (251), et comparer (108) le paramètre de non-planéité de la paroi de fond (Δz ; Δd) avec ladite plage acceptable de non-planéité de la paroi de fond, et optionnellement dans lequel les attributs dimensionnels incluent en outre une plage acceptable de déformation locale de la paroi de fond et le procédé de contrôle de géométrie (100) comprend en outre comparer des déformations locales de la paroi de fond de la structure à contrôler avec ladite plage acceptable de déformation locale de la paroi de fond.

10. Procédé de contrôle de géométrie (100) selon l'une quelconque des revendications 1 à 9, dans lequel N est un nombre pair, plus particulièrement N est un nombre pair compris entre 8 et 56, plus particulièrement encore N = 8 ou N = 56.

11. Procédé de contrôle de géométrie (100) selon l'une quelconque des revendications 1 à 10, comprenant en outre une étape de génération consistant à générer (109) une représentation visuelle d'un résultat d'au moins une dite comparaison (108) et/ou comportant en outre l'étape d'attribuer une qualification de conformité à la structure à contrôler, la qualification de conformité étant choisie parmi conforme et non-conforme.

12. Procédé de contrôle de géométrie (100) selon l'une quelconque des revendications 1 à 11, dans lequel la pluralité de premières mesures (50) provient d'une acquisition de mesures (1001) au moyen d'un instrument de mesure dans la structure à contrôler et dans lequel l'instrument de mesure comporte un appareil de télédétection par laser (91) disposé dans un espace interne (11) de la structure à contrôler.

13. Procédé de contrôle de géométrie (100) selon l'une quelconque des revendications 1 à 12, dans lequel la structure à contrôler est une structure porteuse pour une installation de stockage de gaz liquéfié (1) et/ou dans lequel la structure à contrôler est en béton.

14. Programme d'ordinateur comprenant des instructions qui, lorsque le programme d'ordinateur est exécuté par un ordinateur, conduisent l'ordinateur à exécuter le procédé de contrôle de géométrie (100) selon l'une quelconque des revendications 1 à 13.

15. Dispositif de contrôle de géométrie (3000) comprenant au moins un processeur (3001) et au moins une mémoire (3002) contenant un programme d'ordinateur, dans lequel ladite au moins une mémoire (3002) et le programme d'ordinateur sont configurés, avec ledit au moins un processeur (3001), pour causer l'exécution du procédé de contrôle de géométrie (100) selon l'une quelconque des revendications 1 à 13 par le dispositif de contrôle de géométrie (3000).

## Patentansprüche

1. Computergestütztes Verfahren zur Geometrieprüfung (100), umfassend:
- Festlegen (101) eines Strukturmodells (10), wobei das Strukturmodell (10) geometrische Attribute und dimensionale Attribute umfasst, wobei die geometrischen Attribute eine Anzahl N von Seiten eines Polygons umfassen, wobei N eine ganze Zahl größer oder gleich 3 ist, und wobei die dimensionalen Attribute einen zulässigen Durchmesserbereich (D) umfassen;
- Zur Verfügung stellen (102) einer Vielzahl von ersten Messwerten (50), die jeweils eine in einem dreidimensionalen Koordinatensystem (x1, y1, z1) gemessene Position eines Punktes auf einer zu prüfenden Struktur darstellen;
- Bestimmen (103) eines zylindrischen Koordinatensystems (r, Θ, z) mit einer vertikalen Achse (19), die parallel zu einer Achse des genannten dreidimensionalen Koordinatensystems verläuft, wobei die genannte vertikale Achse (19) eine Position aufweist, die eine Streuung der ersten Messwerte (50) gemäß einer radialen Koordinate (r) in dem zylindrischen Koordinatensystem minimiert;
- Festlegen (104) erster disjunkter Sektoren (200) des Raums im zylindrischen Koordinatensystem (r, Θ, z), wobei die ersten Sektoren (200) durch Inkremente der Azimutalkoordinaten (δΘ) und Inkremente der Achsenkoordinaten (δz) in dem zylindrischen Koordinatensystem (r, Θ, z) definiert sind;
- Berechnen (105) einer Vielzahl von ersten Diskretisierungspunkten (250) ausgehend von den ersten Messungen (50), wobei jeder erste Diskretisierungspunkt (250) eine durchschnittliche Position der zu prüfenden Struktur in einem der ersten Sektoren (200) darstellt;
- Berechnen (106) der geschätzten Positionen (300) von N vertikalen Kanten (13) der zu prüfenden Struktur ausgehend von den ersten Diskretisierungspunkten (250);
- Berechnen (107) der geschätzten Positionen (400) von N Mittellinien anhand der geschätzten Positionen (300) der N vertikalen Kanten (13), wobei jede Mittellinie eine Mittellinie eines vertikalen Abschnitts (14) der zu prüfenden Struktur ist; und
- Vergleichen (108) der Abstände zwischen diametral gegenüberliegenden Mittellinien mit dem genannten zulässigen Durchmesserbereich (D) anhand der geschätzten Positionen der N Mittellinien.

2. Verfahren zur Geometrieprüfung (100) gemäß Anspruch 1, wobei die Maßattribute weiterhin einen zulässigen Radienbereich (Q) umfassen, und wobei das Verfahren zur Geometrieprüfung (100) weiterhin das Vergleichen (108) von Abständen zwischen den geschätzten Positionen (400) der N Medianen und der vertikalen Achse (19) mit dem zulässigen Radienbereich umfasst.

3. Verfahren zur Geometrieprüfung (100) gemäß einem der Ansprüche 1 bis 2, wobei die Maßattribute weiterhin einen zulässigen Bereich für die Flankenbreite (W) umfassen, und wobei das Verfahren zur Geometrieprüfung (100) weiterhin das Vergleichen (108) von Abständen zwischen den geschätzten Positionen (300) zweier benachbarter vertikaler Kanten (13) mit dem genannten zulässigen Bereich der Spaltbreite umfasst.

4. Verfahren zur Geometrieprüfung (100) gemäß einem der Ansprüche 1 bis 3, wobei die Maßattribute ferner einen zulässigen Bereich für die Kantenabweichung von der Senkrechten (NV) umfassen, und wobei das Verfahren zur Geometrieprüfung (100) weiterhin das Vergleichen (108) von Abständen senkrecht zur vertikalen Achse (19) des zylindrischen Koordinatensystems zwischen Endpunkten jeder vertikalen Kante (13) mit dem akzeptablen Bereich der Kantenabweichung (NV) umfasst.

5. Verfahren zur Geometrieprüfung (100) gemäß einem der Ansprüche 1 bis 4, wobei die Maßattribute ferner einen zulässigen Bereich für die Ovalität (OV) weiterhin umfassen, und wobei das Verfahren zur Geometrieprüfung (100) weiterhin das Vergleichen (108) einer Durchmesserabweichung zwischen einem größeren eingeschriebenen Kreis (CI) der vertikalen Wand (12) und einem kleineren umschriebenen Kreis (CC) der vertikalen Wand (12) der zu prüfenden Struktur mit dem genannten zulässigen Ovalitätsbereich umfasst.

6. Verfahren zur Geometrieprüfung (100) gemäß einem der Ansprüche 1 bis 5, wobei die Maßattribute weiterhin einen zulässigen Bereich für die lokale Verformung der vertikalen Flächen (14) umfassen, und wobei das Verfahren zur Geometrieprüfung (100) weiterhin das Vergleichen lokaler Verformungen der zu prüfenden Struktur mit dem genannten akzeptablen Bereich der lokalen Verformung der vertikalen Flächen (14) umfasst.

7. Verfahren zur Geometrieprüfung (100) gemäß einem der Ansprüche 1 bis 6, wobei die Maßattribute weiterhin einen zulässigen Bereich der Nicht-Vertikalität der vertikalen Flächen (14) umfassen und wobei das Verfahren zur Geometrieprüfung (100) weiterhin umfasst:
- Auswählen einer Gruppe der ersten Diskretisierungspunkte (250), wobei in dieser Gruppe die Azimutkoordinaten (Θ) der ersten Diskretisierungspunkte (250) untereinander gleich sind;
- Bestimmen von Abweichungen (ΔR) der Radialkoordinate (R) zwischen den ersten Diskretisierungspunkten (250) der Gruppe; und
- Vergleichen der Abweichungen (ΔR) der Radialkoordinate (R) mit dem genannten zulässigen Bereich der Nicht-Vertikalität der vertikalen Flächen (14).

8. Verfahren zur Geometrieprüfung (100) gemäß einem der Ansprüche 1 bis 7, wobei die Maßattribute weiterhin einen zulässigen Bereich der Unebenheit der vertikalen Flächen (14) umfassen und das Verfahren zur Geometrieprüfung (100) weiterhin umfasst:
- Ausgehend von den geschätzten Positionen (300) der N vertikalen Kanten (13) werden die ersten Messungen (50) ausgewählt, die einer vertikalen Fläche (14) der zu prüfenden Struktur entsprechen;
- Berechnen eines Parameters für die Unebenheit der vertikalen Fläche (Δk) anhand der ausgewählten ersten Messwerte (50) und Vergleichen des Parameters für die Unebenheit der vertikalen Flächen (Δk) mit dem genannten akzeptablen Bereich der Unebenheit der vertikalen Flächen (14).

9. Verfahren zur Geometrieprüfung (100) gemäß einem der Ansprüche 1 bis 8, wobei die geometrischen Merkmale weiterhin eine ebene Bodenwand umfassen, wobei die dimensionalen Merkmale weiterhin einen zulässigen Bereich der Unebenheit der Bodenwand umfassen und das Geometrieprüfverfahren (100) weiterhin umfasst:
- Zur Verfügung stellen (102) einer Vielzahl von zweiten Messwerten (51), von denen jeder eine in dem dreidimensionalen Koordinatensystem (x1, y1, z1) gemessene Position eines Punktes darstellt, der sich auf einer Bodenwand (15) der zu prüfenden Struktur befindet;
- Zuordnung (103) eines kartesischen Koordinatensystems (x, y, z) zu den zweiten Messwerten (51), wobei das kartesische Koordinatensystem eine erste Achse, eine zweite Achse und eine dritte Achse aufweist, die zueinander senkrecht stehen, wobei die dritte Achse mit der vertikalen Achse (19) des zylindrischen Koordinatensystems zusammenfällt;
- Festlegen (104) von zweiten, voneinander getrennten Sektoren (201) des Raums in dem kartesischen Koordinatensystem, wobei die zweiten Sektoren (201) durch Koordinateninkremente (δx, δy) gemäß den ersten und zweiten Achsen des kartesischen Koordinatensystems (x, y, z) definiert sind;
- Berechnen (105) einer Vielzahl von zweiten Diskretisierungspunkten (251) anhand der zweiten Messungen (51), wobei jeder zweite Diskretisierungspunkt (251) eine durchschnittliche Position der Bodenwand (15) der zu prüfenden Struktur in einem der zweiten Sektoren (201) darstellt;
- Berechnen (108) eines Unebenheitsparameters der Bodenwand (Δz; Δd) anhand der zweiten Diskretisierungspunkte (251) und Vergleichen (108) des Unebenheitsparameters der Bodenwand (Δz; Δd) mit dem genannten akzeptablen Bereich der Unebenheit der Bodenwand, und wobei die dimensionalen Attribute weiterhin einen zulässigen Bereich der lokalen Verformung der Bodenwand umfassen und das Verfahren zur Geometrieprüfung (100) weiterhin das Vergleichen lokaler Verformungen der Bodenwand der zu kontrollierenden Struktur mit dem genannten zulässigen Bereich der lokalen Verformung der Bodenwand umfasst.

10. Verfahren zur Geometrieprüfung (100) gemäß einem der Ansprüche 1 bis 9, wobei N eine gerade Zahl ist, insbesondere N eine gerade Zahl zwischen 8 und 56 ist, insbesondere N = 8 oder N = 56.

11. Verfahren zur Geometrieprüfung (100) gemäß einem der Ansprüche 1 bis 10, das weiterhin einen Erzeugungsschritt umfasst, der darin besteht, eine visuelle Darstellung eines Ergebnisses mindestens eines der genannten Vergleiche (108) zu erzeugen (109), und/oder weiterhin den Schritt umfasst, der zu prüfenden Struktur eine Konformitätsbewertung zuzuweisen, wobei die Konformitätsbewertung aus "konform" und "nicht konform" ausgewählt wird.

12. Verfahren zur Geometrieprüfung (100) gemäß einem der Ansprüche 1 bis 11, wobei die Vielzahl von ersten Messungen (50) aus einer Messwerterfassung (1001) mit Hilfe eines Messinstruments in der zu prüfenden Struktur stammt und wobei das Messinstrument eine Laser-Fernerkundungsvorrichtung (91) umfasst, die in einem Innenraum (11) der zu prüfenden Struktur angeordnet ist.

13. Verfahren zur Geometrieprüfung (100) gemäß einem der Ansprüche 1 bis 12, wobei die zu prüfende Struktur eine Tragstruktur für eine Anlage für Flüssiggas (1) ist und/oder wobei die zu prüfende Struktur aus Beton besteht.

14. Computerprogramm, das Befehle umfasst, die, wenn das Computerprogramm von einem Computer ausgeführt wird, den Computer veranlassen, das Verfahren zur Geometriestprüfung(100) gemäß einem der Ansprüche 1 bis 13 auszuführen.

15. Geometrieprüfvorrichtung (3000) umfasst mindestens einen Prozessor (3001) und mindestens einen Speicher (3002), der ein Computerprogramm enthält, wobei der mindestens eine Speicher (3002) und das Computerprogramm zusammen mit dem mindestens einen Prozessor (3001) so konfiguriert sind, dass sie die Ausführung des Geometrieprüfverfahrens (100) gemäß einem der Ansprüche 1 bis 13 durch die Geometrieprüfvorrichtung (3000) bewirken.

## Claims

1. A computer-implemented geometry monitoring method (100) comprising:
- specifying (101) a structure design (10), the structure design (10) having geometric attributes and dimensional attributes, the geometric attributes including a number N of sides of a polygon, N being an integer greater than or equal to 3, the dimensional attributes including an acceptable range of diameters (D);
- obtaining (102) a plurality of first measurements (50) each representing a measured position in a three-dimensional frame of reference (x₁, y₁, z₁) of a point situated on a structure to be monitored;
- determining (103) a system of cylindrical coordinates (r, θ, z) having a vertical axis (19) parallel to an axis of said three-dimensional frame of reference, said vertical axis (19) having a position that minimizes a dispersion of said first measurements (50) with respect to a radial coordinate (r) of said system of cylindrical coordinates;
- specifying (104) first disjoint sectors (200) of the space in the system of cylindrical coordinates (r, θ, z), said first sectors (200) being defined by azimuth coordinate increments (δθ) and axial coordinate increments (δz) in said system of cylindrical coordinates (r, θ, z);
- calculating (105) on the basis of the first measurements (50) a plurality of first discretization points (250), each first discretization point (250) representing a mean position of the structure to be monitored in one of said first sectors (200);
- calculating (106) on the basis of the first discretization points (250) estimated positions (300) of N vertical edges (13) of the structure to be monitored;
- calculating (107) on the basis of the estimated positions (300) of the N vertical edges (13) estimated positions (400) of N medians, each median being a median of the vertical panel (14) of the structure to be monitored; and
- comparing (108) on the basis of the estimated positions of the N medians the distances between diametrically opposite medians and an acceptable range of diameters (D).

2. The geometry monitoring method (100) as claimed in claim 1, in which the dimensional attributes further include an acceptable range of radii (Q) and in which the geometry monitoring method (100) further comprises comparing (108) the distances between said estimated positions (400) of the N medians and said vertical axis (19) with said acceptable range of radii.

3. The geometry monitoring method (100) as claimed in either one of claims 1 or 2, in which the dimensional attributes further include an acceptable range of panel widths (W) and in which the geometry monitoring method (100) further comprises comparing (108) the distances between the estimated positions (300) of two adjacent vertical edges (13) with said acceptable range of panel widths.

4. The geometry monitoring method (100) as claimed in any one of claims 1 to 3, in which the dimensional attributes further include an acceptable range of edge non-verticality (NV) and in which the geometry monitoring method (100) further comprises comparing (108) distances perpendicular to the vertical axis (19) of said system of cylindrical coordinates between end points of each vertical edge (13) with said acceptable range of edge non-verticality (NV).

5. The geometry monitoring method (100) as claimed in any one of claims 1 to 4, in which the dimensional attributes further include an acceptable range of ovalization (OV) and in which the geometry monitoring method (100) further comprises comparing (108) a diameter difference between an inscribed larger circle (CI) of the vertical wall (12) and a circumscribed smaller circle (CC) of the vertical wall (12) of the structure to be monitored with said acceptable range of ovalization.

6. The geometry monitoring method (100) as claimed in any one of claims 1 to 5, in which the dimensional attributes further include an acceptable range of local deformations of the vertical panels (14) and in which the geometry monitoring method (100) further comprises comparing local deformations of the structure to be monitored with said acceptable range of local deformations of the vertical panels (14).

7. The geometry monitoring method (100) as claimed in any one of claims 1 to 6, in which the dimensional attributes further include an acceptable range of non-verticality of the vertical panels (14) and in which the geometry monitoring method (100) further comprises:
- selecting a subset of the first discretization points (250), in which subset the azimuth coordinates (Θ) of the first discretization points (250) are equal to one another;
- determining the differences (ΔR) of radial coordinates (R) between the first discretization points (250) of the subsets; and
- comparing the differences (ΔR) of radial coordinates (R) with said acceptable range of non-verticality of the vertical panels (14).

8. The geometry monitoring method (100) as claimed in any one of claims 1 to 7, in which the dimensional attributes further include an acceptable range of non-flatness of the vertical panels (14) and the geometry monitoring method (100) further includes:
- on the basis of the estimated positions (300) of the N vertical edges (13), selecting the first measurements (50) corresponding to a vertical panel (14) of the structure to be monitored;
- calculating a vertical panel non-flatness parameter (Δk) on the basis of the selected first measurements (50) and comparing the vertical panel non-flatness parameter (Δk) with said acceptable range of non-flatness of the vertical panels (14).

9. The geometry monitoring method (100) as claimed in any one of claims 1 to 8, in which the geometric attributes further include a plane bottom wall and the dimensional attributes further include an acceptable range of non-flatness of the bottom wall, and the geometry monitoring method (100) further includes:
- obtaining (102) a plurality of second measurements (51) each representing a position measured in said three-dimensional frame of reference (x₁, y₁, z₁) of a point situated on a bottom wall (15) of the structure to be monitored;
- associating (103) with the second measurements (51) a system of cartesian coordinates (x, y, z), said system of cartesian coordinates having a first axis, a second axis and a third axis that are mutually perpendicular, the third axis coinciding with said vertical axis (19) of said system of cylindrical coordinates;
- specifying (104) disjoint second sectors (201) of the space in said system of cartesian coordinates, said second sectors (201) being defined by increments (δx, δy) of coordinates along the first axis and the second axis of said system of cartesian coordinates (x, y, z);
- calculating (105) on the basis of the second measurements (51) a plurality of second discretization points (251), each second discretization point (251) representing a mean position of the bottom wall (15) of the structure to be monitored in one of said second sectors (201);
- calculating (108) a parameter of non-flatness of the bottom wall (Δz; Δd) on the basis of the second discretization points (251) and comparing (108) the parameter of non-flatness of the bottom wall (Δz; Δd) with said acceptable range of non-flatness of the bottom wall, and optionally in which the dimensional attributes further include an acceptable range of local deformations of the bottom wall and in which the geometry monitoring method (100) further comprises comparing local deformations of the bottom wall of the structure to be monitored with said acceptable range of local deformations of the bottom wall.

10. The geometry monitoring method (100) as claimed in any one of claims 1 to 9, in which N is an even number and N is more particularly an even number between 8 and 56, even more particularly N = 8 or N = 56.

11. The geometry monitoring method (100) as claimed in any one of claims 1 to 10, further comprising a generation step consisting in generating (109) a visual representation of a result of at least one of said comparisons (108) and/or further including the step of assigning a qualification of conformity to the structure to be monitored, the qualification of conformity being chosen between conform and non-conform.

12. The geometry monitoring method (100) as claimed in any one of claims 1 to 11, in which the plurality of first measurements (50) comes from an acquisition of measurements (1001) by means of a measuring instrument in the structure to be monitored and in which the measuring instrument includes a laser detection and ranging device (91) disposed in an internal space (11) of the structure to be monitored.

13. The geometry monitoring method (100) as claimed in any one of claims 1 to 12, in which the structure to be monitored is a supporting structure for a liquefied gas storage installation (1) and/or in which the structure to be monitored is made of concrete.

14. A computer program comprising instructions which, when the computer program is implemented by a computer, cause the computer to execute the geometry monitoring method (100) as claimed in any one of claims 1 to 13.

15. A geometry monitoring device (3000) comprising at least one processor (3001) and at least one memory (3002) containing a computer program, in which said at least one memory (3002) and the computer program are configured, with said at least one processor (3001), to cause execution of the geometry monitoring method (100) as claimed in any one of claims 1 to 13 by the geometry monitoring device (3000).
